# EUROPEAN PATENT APPLICATION

(11) **EP 4 578 595 A1**
(43) Date of publication of application: **02.07.2025**
(21) Application number: 24222942.5
(22) Date of filing: 23.12.2024
(51) Int. Cl.: B23Q 7/14, A61C 13/00, B23Q 7/04

(54) **CUTTING MACHINE**

(30) Priority: 26.12.2023 JP 2023219047
(71) Applicant: DGSHAPE Corporation, Hamamatsu-shi, Shizuoka 431-2103 (JP)
(72) Inventor: Shimamiya, Hiroki, Hamamatsu-shi, Shizuoka, 431-2103 (JP); Sato, Ryo, Hamamatsu-shi, Shizuoka, 431-2103 (JP)
(74) Representative: Grünecker Patent- und Rechtsanwälte PartG mbB

(57) **Abstract**

A holding device of a cutting machine includes a first arm and a second arm. An adapter that holds a workpiece includes a first projecting portion provided on a first end portion. The first arm includes a first holding portion that is movable in a holding direction and a first elastic member that applies a pressing force to the holding portion toward the second arm. When the adapter is not held by the holding device, the first holding portion is arranged in a position that the first projecting portion passes when the workpiece moves with respect to the holding device in the attaching and detaching direction toward a holding position. The first projecting portion contacts the first holding portion when the workpiece passes a middle position that is a position where the workpiece is in middle of moving in the attaching and detaching direction toward the holding position.

## Description

### BACKGROUND OF THE INVENTION

### Field of the Invention

The present invention relates to a cutting machine.

### Description of the Related Art

Japanese Laid-open Publication No. 2017-13155 discloses a cutting machine that cuts a workpiece that is to be cut by rotating a bar-like cutting tool around an axis of the cutting tool, for example. The cutting machine includes a spindle including a gripping portion that grips the cutting tool that cuts the workpiece and a holding portion that holds the workpiece.

The cutting machine includes a case body having an internal space in which the holding portion and the spindle are stored. An opening is formed in a front portion of the case body. The case body is provided with a front cover that can open and close the opening. Herein, the workpiece held by the holding portion is manually replaced by a user through the opening of the case body.

Incidentally, in attaching a workpiece that is to be cut to the holding portion, it is difficult in some cases to recognize whether the workpiece is properly attached to the holding portion, that is, whether the holding portion holds the workpiece in a proper position.

### SUMMARY OF THE INVENTION

In view of the foregoing, the present invention has been devised, and it is therefore an object of the present invention to provide a cutting machine in which, in attaching a workpiece that is to be cut to a holding device, it is easy to recognize that the workpiece is properly attached to the holding device.

The present invention is defined in independent claim 1. Preferred embodiments are laid down in the dependent claims. A cutting machine according to the present disclosure includes a holding device that holds, in cutting a workpiece that is to be cut, an adapter holding the workpiece. The holding device is configured to hold the workpiece when the workpiece is moved with respect to the holding device from one side to the other side in an attaching and detaching direction and is arranged in a holding position. The holding device includes a first arm and a second arm. The first arm extends in the attaching and detaching direction. The second arm is arranged so as to be aligned with the first arm in a holding direction that intersects the attaching and detaching direction, extends in the attaching and detaching direction, and holds the workpiece with the first arm such that the workpiece is sandwiched between the first arm and the second arm. The adapter includes a first projection portion that is provided on a first end portion in one side in the holding direction and protrudes toward the one side in the holding direction. The first arm includes a first holding portion that is movable in the holding direction, and a first elastic member that applies a pressing force to the first holding portion toward the second arm. The first holding portion is configured to be arranged, in a state where the adapter is not held by the holding device, in a position that the first projecting portion of the adapter passes when the workpiece moves with respect to the holding device in the attaching and detaching direction toward the holding position. The first holding portion is configured such that, when the workpiece is in middle of moving with respect to the holding device in the attaching and detaching direction toward the holding position and the workpiece passes a middle position that is a position that proceeds from the holding position in one side in the attaching and detaching direction, the first projecting portion of the adapter contacts the first holding portion.

According to the cutting machine, in attaching the workpiece to the holding device and causing the holding device to hold the workpiece, the workpiece is moved in the attaching and detaching direction toward the holding position. Herein, when the workpiece passes the middle position, a force is applied to the workpiece toward the holding position, and thus, the first projecting portion of the adapter is pressed against the first holding portion, so that the first holding portion moves to an opposite side to the second holding portion. Thus, when the workpiece passes the middle position and is positioned in the holding position, the holding device can hold the workpiece. As described above, according to the cutting machine, the workpiece can be properly arranged in the holding position by applying a force to the workpiece when the workpiece passes the middle position. Therefore, it can be made easy to recognize that the workpiece has been properly attached to the holding device.

According to the present invention, a cutting machine in which, in attaching a workpiece that is to be cut to a holding device, it is easy to recognize that the workpiece is properly attached to the holding device can be provided.

### BRIEF DESCRIPTION OF THE DRAWINGS

FIG. 1 is a perspective view illustrating a cutting machine according to a preferred embodiment.
FIG. 2 is a longitudinal cross-sectional view of the cutting machine when viewed from left.
FIG. 3 is a longitudinal cross-sectional view of the cutting machine when viewed from right.
FIG. 4 is a perspective view illustrating the cutting machine when a slide cover is opened.
FIG. 5 is a plan view of a work holder.
FIG. 6 is a schematic view illustrating a state where the work holder is arranged in a cutting position and a state where the work holder is arranged in a replacement position.
FIG. 7 is a plan view illustrating a workpiece and a work holder when the workpiece is positioned in a non-holding position.
FIG. 8 is a plan view illustrating the workpiece held by an adapter.
FIG. 9 is a cross-sectional view of the workpiece and the adapter in a cross section taken along the line IX-IX of FIG. 8.
FIG. 10 is a plan view illustrating the workpiece and the work holder when the workpiece is poisoned in a holding position, illustrating a state where the work holder holds the workpiece.
FIG. 11 is a perspective view illustrating a first holding portion, a first lever, and a first pressed portion.
FIG. 12 is a plan view illustrating a state where the workpiece slides and moves with respect to the work holder.
FIG. 13 is a plan view illustrating the workpiece and the work holder when the workpiece is positioned in a middle position.
FIG. 14 is a plan view illustrating the workpiece and the work holder when the workpiece is positioned in the holding position, illustrating a state where a rotation position of the first holding portion is a first non-fixing rotation position, and a rotation position of a second holding portion is a second non-fixing rotation position.

### DETAILED DESCRIPTION OF THE PREFERRED EMBODIMENTS

With reference to the attached drawings, a preferred embodiment of a cutting machine according to the present invention will be described below. Note that, as a matter of course, the preferred embodiment described herein is not intended to be particularly limiting the present invention.Also, members and portions that have the same function are denoted by the same reference symbol and redundant description will be omitted or simplified, as appropriate.

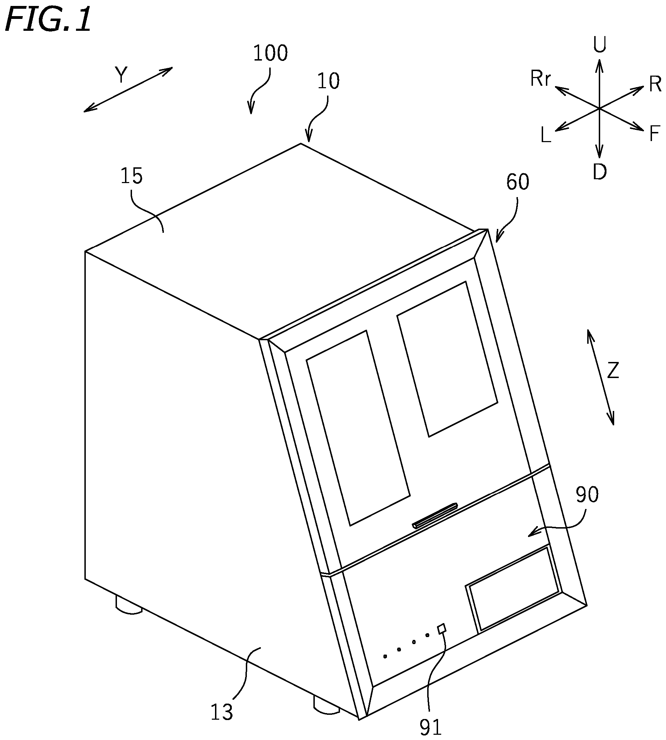

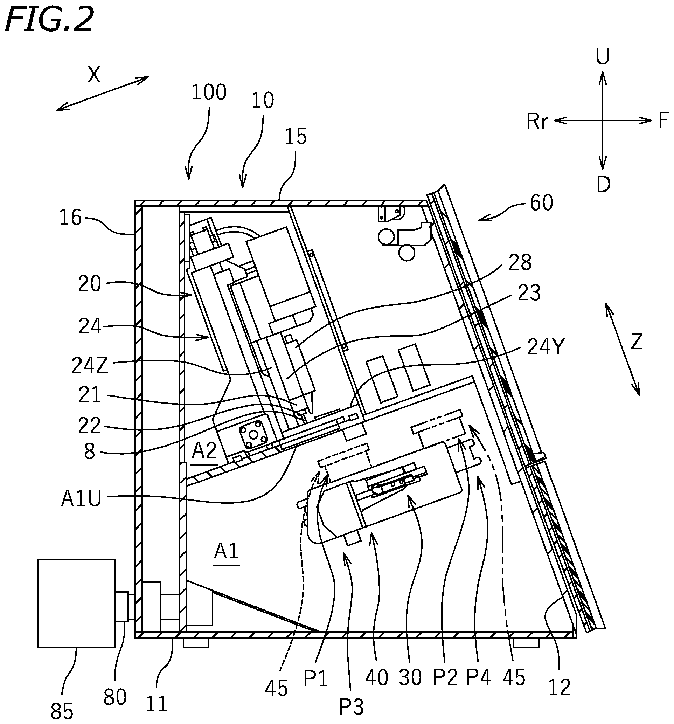

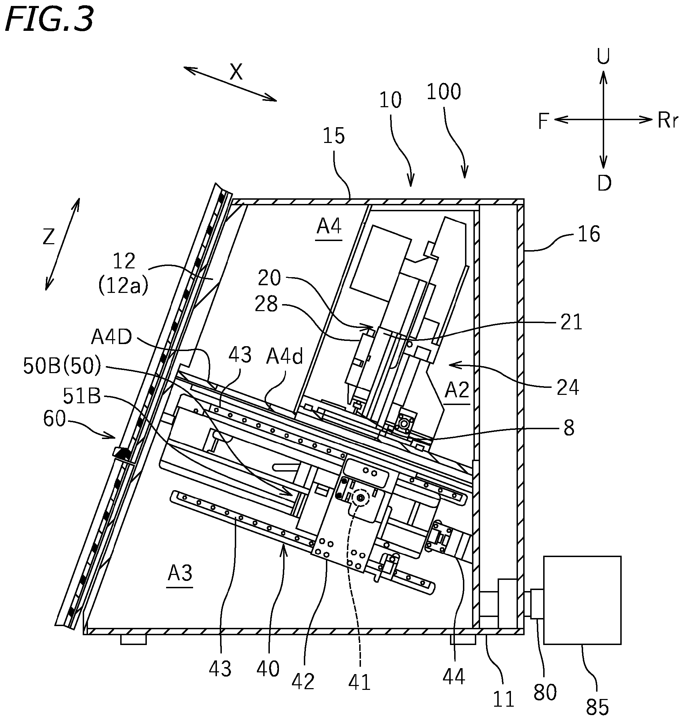

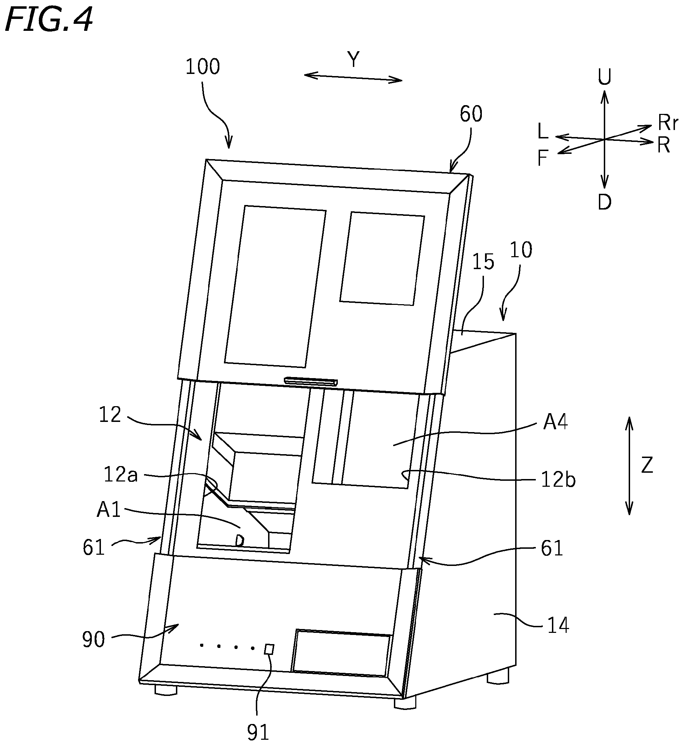

FIG. 1 is a perspective view illustrating a cutting machine 100 according to this preferred embodiment. FIG. 2 is a longitudinal cross-sectional view of the cutting machine 100 when viewed from left. FIG. 3 is a longitudinal cross-sectional view of the cutting machine 100 when viewed from right. FIG. 4 is a perspective view illustrating the cutting machine 100 when a slide cover 60 is opened. The reference signs F, Rr, L, R, U and D as used in the drawings refer to front, rear, left, right, up, and down of the cutting machine 100, respectively. Note that the directions described above are defined merely for convenience of explanation, do not limit an installation form of the cutting machine 100, and do not limit the present invention.

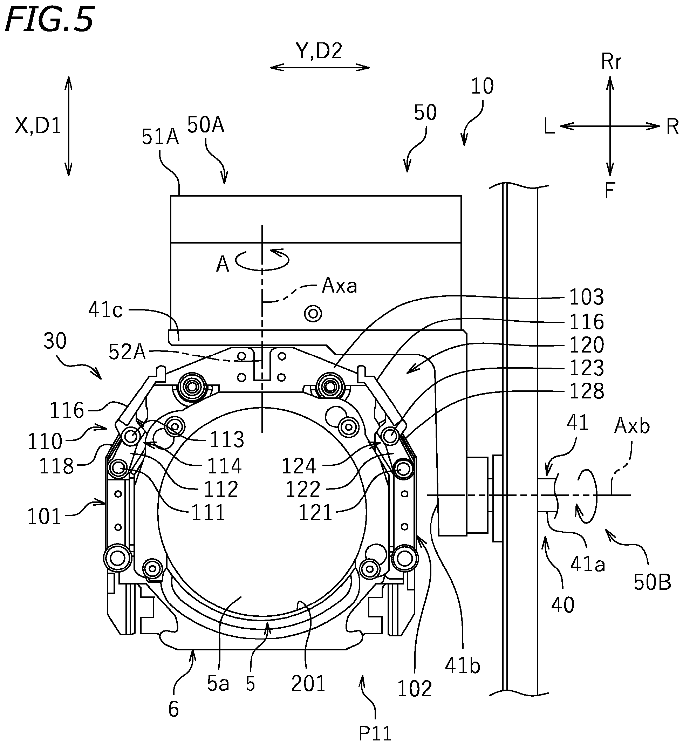

In this preferred embodiment, the cutting machine 100 produces a target object by cutting a workpiece 5 that is to be cut (see FIG. 5). Herein, although there is no particular limitation on a type of the target object, the target object is a dental molded article, for example, a crown prosthesis, an artificial tooth, a denture base, or the like. Examples of the crown prosthesis include, for example, a crown, a bridge, a coping, an inlay, an onlay, a veneer, a custom abutment, or the like. In this preferred embodiment, the cutting machine 100 is used in the dental field and produces a dental molded article from the workpiece 5. However, the field in which the cutting machine 100 is used is not limited to the dental field.

As illustrated in FIG. 1, the cutting machine 100 includes a case body 10. The case 10 is formed into a box shape, and has a space inside. The space inside the case body 10 is partitioned into multiple areas.

Herein, as illustrated in FIG. 2, as the multiple areas, a cutting area A1 in which a work holder 30 that holds the workpiece 5 (see FIG. 5) is stored and a storage area A2 in which a cutting device 20 is stored are provided inside the case body 10. The cutting area A1 is an area in which the workpiece 5 is cut. The cutting area A1 is an example of an area according to the present invention. A first opening 12a (see FIG. 4) is formed in a front of the cutting area A1. The cutting area A1 communicates with outside of the cutting machine 100 through the first opening 12a. The storage area A2 is positioned above the cutting area A1.

As illustrated in FIG. 3, a driving device area A3 in which a holder moving device 40 that moves the work holder 30 and a tool stocker 45 (see FIG. 2) are stored and a tool replacement area A4 arranged in front of the storage area A2 are provided in the case body 10. The driving device area A3 is positioned at right of the cutting area A1. A second opening 12b (see FIG. 4) is formed in front of the tool replacement area A4. The tool replacement area A4 communicates with the outside of the cutting machine 100 through the second opening 12b.

As illustrated in FIG. 4, a slide cover 60 is provided at a front surface of the case body 10 to freely open and close the case body 10. The case body 10 is provided with a slide rail 61 with which the slide cover 60 is engaged and that extends from a front and lower side toward a rear and upper side.

In this preferred embodiment, an operation panel 90 is provided below the slide cover 60. A user performs an operation related to cutting via the operation panel 90. For example, the operation panel 90 includes an input button 91 that is operated by the user.

As illustrated in FIG. 2, the case body 10 includes a bottom wall 11, a front wall 12, a left side these components that constitute the case body 10 is formed of a steel plate or the like. The bottom wall 11 extends in a front-rear direction and a left-right direction and constitutes a bottom surface of the cutting machine 100. The left side wall 13 is connected to a left end of the bottom wall 11. The left side wall 13 extends upward from the left end of the bottom wall 11. The right side wall 14 is connected to a right end of the bottom wall 11. The right side wall 14 extends upward from the right end of the bottom wall 11. The back wall 16 is connected to a rear end of the bottom wall 11. The back wall 16 extends upward from the rear end of the bottom wall 11. A left end of the back wall 16 is connected to a rear end of the left side wall 13. A right end of the back wall 16 is connected to a rear end of the right side wall 14. The top wall 15 is provided above the bottom wall 11 to extend in parallel to the bottom wall 11. The top wall 15 is connected to an upper end of the left side wall 13, an upper end of the right side wall 14, and an upper end of the back wall 16. The front wall 12 is connected to a front end of the bottom wall 11. In this preferred embodiment, the front wall 12 extends upward from the front end of the bottom wall 11 as well as being inclined rearward.

In the following description, a direction in which the front wall 12 extends will be also referred to as a Z-axis direction. Also, in the following description, unless otherwise stated, an upper side in the Z-axis direction will be also referred simply as an upper side, and a lower side in the Z-axis direction will be also referred to simply as a lower side. A left end of the front wall 12 is connected to a front end of the left side wall 13, and a right end of the front wall 12 is connected to a front end of the right side wall 14. An upper end of the front wall 12 is connected to a front end of the top wall 15. As illustrated in FIG. 4, the first opening 12a that communicates with the cutting area A1 and the second opening 12b that communicates with the tool replacement area A4 are formed in the front wall 12. In this preferred embodiment, the first opening 12a is formed in the case body 10 to be opened to a front side in an X-axis direction that will be described later. The first opening 12a is an example of an opening portion formed in a case body.

FIG. 5 is a plan view of the work holder 30. As illustrated in FIG. 5, the cutting machine 100 includes the work holder 30, the holder moving device 40, a holder rotation device 50, the cutting device 20 (see FIG. 2), and the tool stocker 45 (see FIG. 2). The work holder 30 holds the workpiece 5. The work holder 30 is an example of a holding device. Note that details of the work holder 30 will be described later.

The holder moving device 40 supports and moves the work holder 30. In this preferred embodiment, the holder moving device 40 moves the work holder 30 in the front-rear direction. More specifically, as illustrated in FIG. 2, the holder moving device 40 moves the work holder 30 diagonally in the front-rear direction. When the work holder 30 is moved forward by the holder moving device 40, the work holder 30 also moves upward. When the work holder 30 is moved rearward by the holder moving device 40, the work holder 30 also moves downward. A direction in which the work holder 30 is moved by the holder moving device 40 will be hereinafter also referred to as the X-axis direction. The holder moving device 40 moves the work holder 30 in the X-axis direction. Hereinafter, unless otherwise stated, front in the X-axis direction will be also referred to simply as "front" and rear in the X-axis direction will be also referred to simply as "rear." As illustrated in FIG. 5, the holder moving device 40 is connected to the holder rotation device 50.

The holder moving device 40 includes a support arm 41 that extends in the left-right direction and supports the work holder 30. As illustrated in FIG. 3, the holder moving device 40 includes an X-axis direction moving body 42 connected to the support arm 41, a pair of X-axis guide rails 43, and an X-axis direction driving motor 44. The holder moving device 40 moves the work holder 30 in the X-axis direction by moving the support arm 41 in the X-axis direction. Herein, the X-axis direction moving body 42, the pair of X-axis guide rails 43, the X-axis direction driving motor 44, and a part of the support arm 41 of the holder moving device 40 are stored in the driving device area A3.

The pair of X-axis guide rails 43 extend in the X-axis direction. The X-axis direction moving body 42 is slidably engaged with the pair of X-axis guide rails 43. The X-axis direction moving body 42 is configured to move in the X-axis direction along the X-axis guide rails 43. Although not illustrated, for example, the X-axis direction moving body 42 is connected to a ball screw. That is, the holder moving device 40 includes a ball screw mechanism. The X-axis direction driving motor 44 rotates the ball screw. When the X-axis direction driving motor 44 is driven, the X-axis direction moving body 42 moves in the X-axis direction along the X-axis guide rails 43. Note that the holder moving device 40 is not limited to a holder moving device including a ball screw mechanism and, for example, may include a timing belt or a wire.

As illustrated in FIG. 5, the support arm 41 includes a rotating shaft 41a that rotates around an axis line Axb extending in the left-right direction, a first rotating arm 41b that is connected to the rotating shaft 41a orthogonally to the axis line Axb and rotates together with the rotating shaft 41a in the front-rear direction, and a second rotating arm 41c connected to the first rotating arm 41b in parallel to the axis line Axb (in other words, orthogonally to the first rotating arm 41b). As illustrated in FIG. 3, a B-axis rotating motor 51B of a B-axis rotation device 50B that will be described later is connected to the X-axis direction moving body 42. The rotating shaft 41a (see FIG. 5) is rotated around the axis line Axb (see FIG. 5) by the B-axis rotating motor 51B.

The holder rotation device 50 rotates the work holder 30. As illustrated in FIG. 5, the holder rotation device 50 also includes an A-axis rotation device 50A that rotates the work holder 30 in the left-right direction and the B-axis rotation device 50B (see FIG. 3) that rotates the work holder 30 in the front-rear direction. The A-axis rotation device 50A includes an A-axis rotating motor 51A and a rotation axis 52A. The A-axis rotating motor 51A is fixed to the second rotation arm 41c. The rotation axis 52A is connected to the A-axis rotating motor 51A (specifically, a drive unit including the A-axis rotating motor 51A) and extends in the X-axis direction along an axis line Axa. Herein, a rear end of the rotation axis 52A is connected to the A-axis rotating motor 51A. A front end of the rotation axis 52A is connected to the work holder 30 (specifically, a central portion of a coupling portion 103 of the work holder 30 that will be described later). In this preferred embodiment, when the A-axis rotating motor 51A is driven, the rotation axis 52A rotates around the axis line Axa. The work holder 30 rotates around the axis line Axa as the rotation axis 52A rotates, and therefore, can rotate in the left-right direction.

The B-axis rotation device 50B includes the B-axis rotating motor 51B (see FIG. 3) and the rotating shaft 41a (see FIG. 5) described above. As illustrated in FIG. 3, the B-axis rotating motor 51B is connected to the X-axis direction moving body 42 in a manner described above. As illustrated in FIG. 5, the rotating shaft 41a extends in the left-right direction. A right end of the rotating shaft 41a is connected to the B-axis rotating motor 51B. A left end of the rotating shaft 41a is connected to the work holder 30 via the first rotating arm 41b, the second rotating arm 41c, and the rotation axis 52A. Herein, the B-axis rotating motor 51B is driven, and thus, the rotating shaft 41a rotates around the axis line Axb. As the rotating shaft 41a rotates, the work holder 30 rotates together with the first rotating arm 41b and the second rotating arm 41c or the like around the axis line Axb, and therefore, can rotate in the front-rear direction.

The cutting device 20 illustrated in FIG. 2 cuts the workpiece 5. The cutting device 20 cuts the workpiece 5 by causing a processing tool 8 to contact the workpiece 5 while rotating the processing tool 8. The cutting device 20 includes a spindle 21, a tool gripping portion 22 that grips the processing tool 8, a spindle rotation device 23 that rotates the spindle 21, and a cutting and moving device 24 that can move the spindle 21 in the left-right direction (herein, a Y-axis direction) and the Z-axis direction. When the cutting device 20 is not performing cutting on the workpiece 5, the cutting device 20 is arranged in the storage area A2.

The spindle 21 rotates the tool gripping portion 22 and the processing tool 8 gripped by the tool gripping portion 22 around a longitudinal direction. The spindle 21 extends, for example, in the Z-axis direction. The spindle rotation device 23 is connected to the spindle 21. When the spindle rotation device 23 is driven, the spindle 21 rotates around a central axis that extends in the Z-axis direction. Note that there is no particular limitation on a configuration of the spindle rotation device 23 and, for example, an electric motor or the like may be used.

The tool gripping portion 22 grips the processing tool 8, and is provided to the spindle 21. In the cutting machine 100, multiple processing tools 8 having different diameters and cutting portions with different shapes are prepared in advance. The multiple processing tools 8 are stored in the tool stocker 45. The tool gripping portion 22 selectively grips one of the multiple processing tools 8. The spindle 21 rotates around the central axis that extends in the Z-axis direction, and thus, the tool gripping portion 22 and the processing tool 8 gripped by the tool gripping portion 22 rotate around the central axis of the processing tool 8.

As illustrated in FIG. 2, an air blow device 28 is provided in the cutting device 20. The air blow device 28 is provided at a side of the spindle 21.The air blow device 28 jets air downward from a lower end portion thereof in the Z-axis direction. There is no particular limitation on a supply source of the air jetted by the air blow device 28. For example, the supply source may be a compressor or the like installed outside the cutting machine 100. During cutting of the workpiece 5, the air blow device 28 jets air, so that cutting powder generated when the workpiece 5 is cut can be blown off. Although cutting heat is generated during cutting, the air blow device 28 jets air toward the workpiece 5 and the processing tool 8, and therefore, the workpiece 5 and the processing tool 8 can be cooled down.

The cutting and moving device 24 moves the spindle 21, the tool gripping portion 22, the spindle rotation device 23, and the air blow device 28 in the Z-axis direction and the left-right direction. Herein, the left-right direction is a direction that is orthogonal to the X-axis direction and the Z-axis direction. The left-right direction will be hereinafter also referred to as the Y-axis direction. The cutting and moving device 24 is provided above the work holder 30. The cutting and moving device 24 moves the spindle 21, the tool gripping portion 22, the spindle rotation device 23, and the air blow device 28 in the Y-axis direction and the Z-axis direction, and the holder moving device 40 moves the work holder 30 in the X-axis direction, so that a positional relationship between the processing tool 8 and the workpiece 5 three-dimensionally changes. When the spindle 21, the tool gripping portion 22, the spindle rotation device 23, and the air blow device 28 move in the Z-axis direction, accordingly, the spindle 21, the tool gripping portion 22, the spindle rotation device 23, and the air blow device 28 appear in the cutting area A1 or retreat in the storage area A2. Herein, the cutting area A1 and the storage area A2 communicate with each other via an opening portion A1U. The opening portion A1U has a size that is large enough for the spindle 21, the tool gripping portion 22, the spindle rotation device 23, and the air blow device 28 to pass therethrough. When cutting is performed on the workpiece 5, the cutting and moving device 24 moves the spindle 21, the tool gripping portion 22, the spindle rotation device 23, and the air blow device 28 to the cutting area A1.

As illustrated in FIG. 2, the cutting and moving device 24 includes a left and right moving device 24Y and an up and down moving device 24Z. When the left and right moving device 24Y is driven, the spindle 21, the tool gripping portion 22, the spindle rotation device 23, and the air blow device 28 move in the Y-axis direction. When the up and down moving device 24Z is driven, the spindle 21, the tool gripping portion 22, the spindle rotation device 23, and the air blow device 28 move in the Z-axis direction. Note that there is no particular limitation on a configuration of the cutting and moving device 24. For example, the left and right moving device 24Y may be constituted of a guide rail that extends in the Y-axis direction, a left and right moving body slidably engaged with the guide rail, a ball screw connected to the left and right moving body, an electric motor that rotates the ball screw, or the like. For example, similar to the left and right moving device 24Y, the up and down moving device 24Z may be a mechanism including a ball screw.

As illustrated in FIG. 2, an exhaust duct 80 is provided in a rear and lower portion of the case body 10. The exhaust duct 80 extends from the cutting area A1 inside the case body 10 to outside of the case body 10. A dust collector 85 is installed outside the case body 10. The dust collector 85 is connected to an end portion of the exhaust duct 80 located outside the case body 10. Although there is no particular limitation on a configuration of the dust collector 85, for example, the dust collector 85 includes a fan. When the fan rotates, accordingly, the dust collector 85 can suck cutting powder with air in the cutting area A1 via the exhaust duct 80.

The tool stocker 45 is stored in the driving device area A3 (see FIG. 3). As illustrated in FIG. 2, the tool stocker 45 is a box-shaped member that can store the multiple processing tools 8 each being formed in a bar-like shape. The multiple processing tools 8 are used properly, for example, in accordance with a material of the workpiece 5 and a type of cutting. The tool stocker 45 is supported by the X-axis direction moving body 42 (see FIG. 3). Specifically, the tool stocker 45 is fixed to an upper surface of the X-axis direction moving body 42. Therefore, the holder moving device 40 is configured to move the tool stocker 45 to a tool gripping position P1 set under the opening portion A1U and a tool replacement position P2 set more forward than the tool gripping position P1. The tool replacement position P2 is set under the tool replacement area A4 (see FIG. 3). As illustrated in FIG. 3, an opening portion A4d is formed to be positioned above the tool replacement position P2 (see FIG. 2) and be opened in the Z-axis direction in a bottom wall A4D of the tool replacement area A4. The opening portion A4d is an opening used for removing and inserting the processing tool 8 from and to the tool stocker 45 by a user. When the holder moving device 40 is driven to move the tool stocker 45 to the tool replacement position P2, the user can access the tool stocker 45 from the tool replacement area A4 through the opening portion A4d.

Next, the work holder 30 that is an example of the holding device will be described below. As illustrated in FIG. 5, the work holder 30 holds the workpiece 5 in cutting the workpiece 5. In this preferred embodiment, the workpiece 5 is held by the adapter 6. Therefore, the work holder 30 indirectly holds the workpiece 5 by holding the adapter 6 holding the workpiece 5. In the following description, when simply the term "the workpiece 5" is used, it refers to the workpiece 5 with the adapter 6 attached thereto, that is, the workpiece 5 held by the adapter 6.

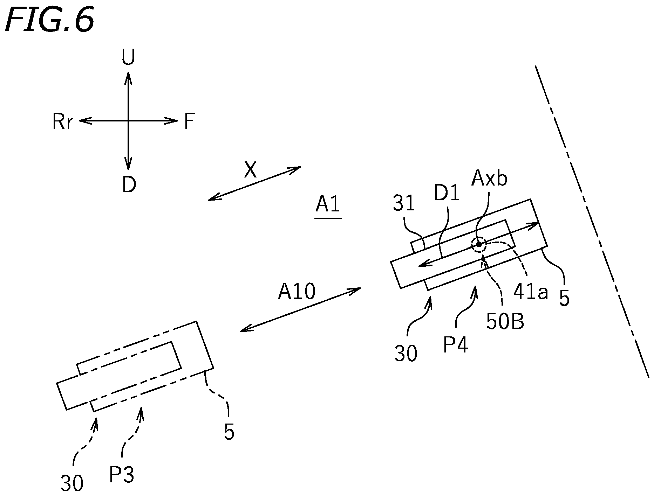

In this preferred embodiment, replacement of the workpiece 5 held by the work holder 30 is manually performed by the user. The work holder 30 is configured to attachably and detachably hold the workpiece 5. FIG. 6 is a schematic view illustrating a state where the work holder 30 is arranged in a cutting position P3 and a state where the work holder 30 is arranged in a replacement position P4. Note that, in FIG. 6, an area at a left side of a one-dot dashed line is the cutting area A1 and an area at a right side of the one-dot dashed line is an area in front of the case body 10. In FIG. 6, the adapter 6 is not illustrated. Herein, the holder moving device 40 of FIG. 3 is configured to move the work holder 30 to the cutting position P3 and the replacement position P4 as indicated by an arrow A10 in FIG. 6. The cutting position P3 is a position of the work holder 30 when the workpiece 5 held by the work holder 30 is cut by the cutting device 20 (see FIG. 2). The cutting position P3 is a position under the opening portion A1U (see FIG. 2) in the cutting area A1. The replacement position P4 is a position of the work holder 30 when the user manually replaces the workpiece 5 held by the work holder 30. The replacement position P4 is positioned more forward than the cutting position P3 in the X-axis direction in the cutting area A1.

As illustrated in FIG. 6, a direction in which the workpiece 5 is moved with respect to the work holder 30 when the user attaches the workpiece 5 to the work holder 30 and when the user detaches the workpiece 5 from the work holder 30 is referred to as an attaching and detaching direction D1. In this preferred embodiment, the attaching and detaching direction D1 is a direction from a front end toward a rear end of the work holder 30, and is also a direction from the rear end toward the front end of the work holder 30. For example, in a state where the workpiece 5 is arranged in front of the work holder 30, the user moves the workpiece 5 from one side (herein, a front side) toward the other side (herein, a rear side) in the attaching and detaching direction D1, and thus, the workpiece 5 is attached to the work holder 30, so that the work holder 30 can hold the workpiece 5. On the other hand, in a state where the workpiece 5 is held by the work holder 30, the user moves the workpiece 5 from the other side toward the one side in the attaching and detaching direction D1, and thus, the workpiece 5 can be detached from the work holder 30. The attaching and detaching direction D1 is, for example, a direction extending in the X-axis direction.

In this preferred embodiment, as illustrated in FIG. 5, a direction that intersects (herein, is orthogonal to) the attaching and detaching direction D1 is a holding direction D2. When viewed from the Z-axis direction, the holding direction D2 and the attaching and detaching direction D1 are orthogonal to each other. The holding direction D2 is, for example, a direction extending in the Y-axis direction. The holding direction D2 is a direction in which a first arm 101 and a second arm 102 of the work holder 30 that will be described later hold the workpiece 5 such that the workpiece 5 is sandwiched between the first arm 101 and the second arm 102. Herein, the first arm 101 and the second arm 102 hold the workpiece 5 such that the workpiece 5 is sandwiched between the first arm 101 and the second arm 102, so that the work holder 30 can hold the workpiece 5 (specifically, the adapter 6 holding the workpiece 5).

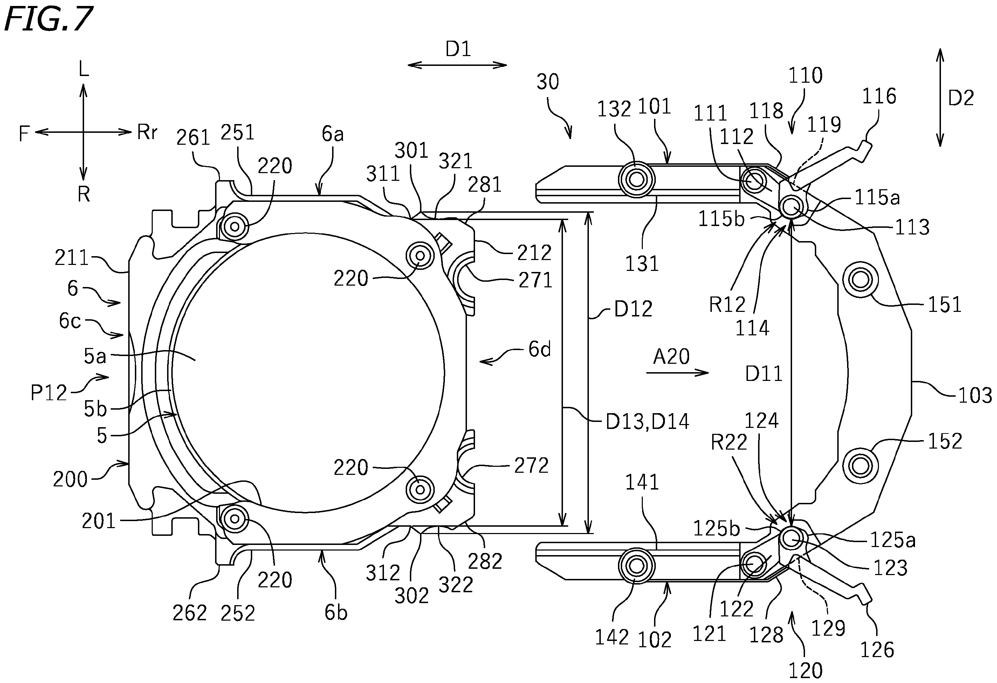

FIG. 7 is a plan view illustrating the workpiece 5 and the work holder 30 when the workpiece 5 is positioned in a non-holding position P12. In this preferred embodiment, as illustrated in FIG. 5, a position of the workpiece 5 with respect to the work holder 30 when the work holder 30 holds the workpiece 5 is referred to as a holding position P11. On the other hand, as illustrated in FIG. 7, the position of the workpiece 5 with respect to the work holder 30 when the work holder 30 does not hold the workpiece 5 is referred to as the non-holding position P12. The non-holding position P12 is a position more forward than the holding position P11. Herein, the non-holding position P12 is a position in which the workpiece 5 is detached from the work holder 30 and that is positioned more forward than the work holder 30.

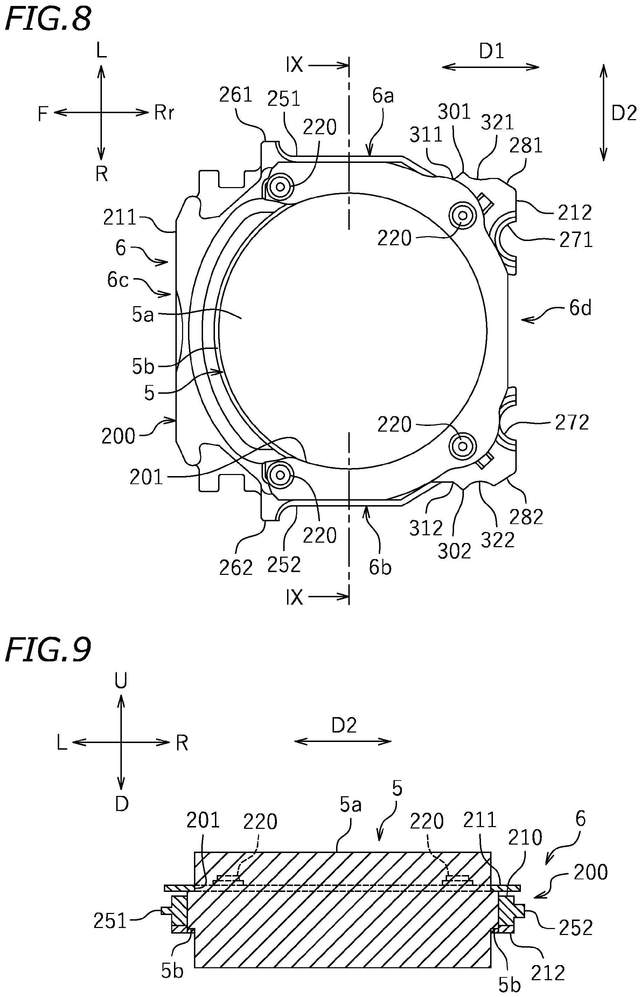

FIG. 8 is a plan view illustrating the workpiece 5 held by the adapter 6. FIG. 9 is a cross-sectional view of the workpiece 5 and the adapter 6 in a cross section taken along the line IX-IX of FIG. 8. As illustrated in FIG. 8, the workpiece 5 held by the work holder 30 has, for example, a plate-like shape extending in the attaching and detaching direction D1 and the holding direction D2. Herein, the workpiece 5 has a disk-like shape. When viewed from the Z-axis direction, the workpiece 5 has a circular shape. As illustrated in FIG. 9, the workpiece 5 includes a disk-shaped workpiece body 5a and an annular projecting potion 5b. The workpiece body 5a is a portion to be cut. The workpiece body 5a is cut, and thus, a target object is produced. The annular projecting potion 5b is a portion to be held by the adapter 6. The annular projecting potion 5b is provided on a peripheral surface of the workpiece body 5a and protrudes from the workpiece body 5a toward outside of the workpiece body 5a. Herein, the annular projecting potion 5b has a smaller thickness than that of the workpiece body 5a and is provided in a central portion of the workpiece body 5a in the Z-axis direction. However, a configuration and a shape of the workpiece 5 are not particularly limited.

There is no particular limitation on a material of the workpiece 5. In this preferred embodiment, workpiece 5 is made of a type of a material, such as zirconia, a polymethyl methacrylate resin (PMMA), a hybrid resin, a polyether ether ketone resin (PEEK), plaster, or the like. When zirconia is used as a type of a material of the workpiece 5, for example, semi-sintered zirconia is used.

In this preferred embodiment, as illustrated in FIG. 8, the adapter 6 that holds the workpiece 5 has, for example, a plate-like shape extending in the attaching and detaching direction D1 and the holding direction D2. Herein, an end portion of the adapter 6 in one side (herein, a left side) in the holding direction D2 is referred to as a first end portion 6a. An end portion of the adapter 6 in the other side (herein, a right side) in the holding direction D2 is referred to as a second end portion 6b. The first end portion 6a and the second end portion 6b are opposed to each other.

The adapter 6 includes an adapter body 200 that extends in the attaching and detaching direction D1 and the holding direction D2. The first end portion 6a forms a left end potion of the adapter body 200. The second end portion 6b forms a right end portion of the adapter body 200. Herein, the first end portion 6a and the second end portion 6b typically extend in the X-axis direction, that is, the attaching and detaching direction D1.

A fitting hole 201 is formed in the adapter body 200. The fitting hole 201 is a hole passing through the adapter body 200 in an up-down direction and is formed in a central portion of the adapter body 200. The workpiece 5 is fitted to the fitting hole 201. The workpiece 5 is fitted to the fitting hole 201, so that the adapter 6 can hold the workpiece 5. The fitting hole 201 has a shape corresponding to the workpiece 5. Herein, the fitting hole 201 has a circular shape.

In this preferred embodiment, as illustrated in FIG. 9, the adapter body 200 includes a frame 210, a first plate 211, and a second plate 212. Herein, the frame 210 is sandwiched between the first plate 211 and the second plate 212. The first plate 211 is arranged above the frame 210. The second plate 212 is arranged under the frame 210. The first plate 211, the frame 210, and the second plate 212 are arranged to be superimposed on each other in this order from top. The fitting hole 201 is formed in the adapter body 200 so as to pass through the frame 210, the first plate 211, and the second plate 212 in the up-down direction.

In this preferred embodiment, the annular projecting potion 5b of the workpiece 5 is sandwiched between the first plate 211 and the second plate 212, so that the adapter 6 can hold the workpiece 5. At this time, the frame 210 is arranged more outward than the annular projecting potion 5b of the workpiece 5. Herein, in a state where the workpiece 5 is fitted to the fitting hole 201 of the adapter 6 and the annular projecting potion 5b of the workpiece 5 is sandwiched between the first plate 211 and the second plate 212, the first plate 211 and the second plate 212 are fastened together by a screw 220. Thus, the workpiece 5 is fixed with respect to the adapter 6. Note that there is no particular limitation on a position of the screw 220 and a number of screws 220. As illustrated in FIG. 8, for example, as the number of the screws 220 is four, and the four screws 220 are arranged in left front, left rear, right front, and right rear portions of the adapter body 200.

The adapter 6 includes a first projecting portion 301, a second projecting portion 302, a first fixing recessed portion 311, a second fixing recessed portion 312, a first non-fixing recessed portion 321, and a second non-fixing recessed portion 322. The first projecting portion 301, the first fixing recessed portion 311, and the first non-fixing recessed portion 321 are provided on the first end portion 6a of the adapter 6. In this preferred embodiment, the adapter 6 includes a front portion 6c and a rear portion 6d when the adapter 6 is divided into two (herein, equal two) in the attaching and detaching direction D1. The first projecting portion 301, the first fixing recessed portion 311, and the first non-fixing recessed portion 321 are provided in the rear portion 6d of the adapter 6. In this preferred embodiment, the first non-fixing recessed portion 321, the first projecting portion 301, and the first fixing recessed portion 311 are arranged so as to be aligned in the attaching and detaching direction D1. Herein, the first fixing recessed portion 311 is a position that proceeds from the first projecting portion 301 in one side (herein, the front side) in the attaching and detaching direction D1. The first non-fixing recessed portion 321 is a position that proceeds from the first projecting portion 301 in the other side (herein, the rear side) in the attaching and detaching direction D1. The first projecting portion 301, the first fixing recessed portion 311, and the first non-fixing recessed portion 321 are provided on the second plate 212 of the adapter body 200.

In this preferred embodiment, the first projecting portion 301 protrudes in one side (herein, the left side) in the holding direction D2, that is, an opposite side to the second end portion 6b. The first projecting portion 301 protrudes leftward from the first end portion 6a of the adapter body 200. The first fixing recessed portion 311 and the first non-fixing recessed portion 321 are recessed toward the second end portion 6b of the adapter 6. Note that a recessed amount of the first fixing recessed portion 311 toward the second end portion 6b may be the same as a recessed amount of the first non-fixing recessed portion 321 toward the second end portion 6b, and may be different from the recessed amount of the first non-fixing recessed portion 321 toward the second end portion 6b. The first fixing recessed portion 311 may be recessed more toward the second end portion 6b than the first non-fixing recessed portion 321, and may not recessed more toward the second end portion 6b than the first non-fixing recessed portion 321.

The second projecting portion 302, the second fixing recessed portion 312, and the second non-fixing recessed portion 322 are provided on the second end portion 6b of the adapter 6. In this preferred embodiment, the second projecting portion 302, the second fixing recessed portion 312, and the second non-fixing recessed portion 322 are provided on the rear portion 6d of the adapter 6. The second non-fixing recessed portion 322, the second projecting portion 302, and the second fixing recessed portion 312 are arranged so as to be aligned in the attaching and detaching direction D1. Herein, the second fixing recessed portion 312 is in a position that proceeds from the second projecting portion 302 in one side (herein, the front side) in the attaching and detaching direction D1. The second non-fixing recessed portion 322 is in a position that proceeds from the second projecting portion 302 in the other side (herein, the rear side) in the attaching and detaching direction D1. A position of the second projecting portion 302 in the attaching and detaching direction D1 is the same as that of the first projecting portion 301. A position of the second fixing recessed portion 312 in the attaching and detaching direction D1 is the same as that of the first fixing recessed portion 311. Similarly, a position of the second non-fixing recessed portion 322 in the attaching and detaching direction D1 is the same as that of the first non-fixing recessed portion 321. The second projecting portion 302, the second fixing recessed portion 312, and the second non-fixing recessed portion 322 are provided on the second plate 212 of the adapter body 200.

In the preferred embodiment, the second projecting portion 302 protrudes in the other side (herein, the right side) in the holding direction D2, that is, an opposite side to the first end portion 6a. The second projecting portion 302 protrudes rightward from the second end portion 6b of the adapter body 200. The second fixing recessed portion 312 and the second non-fixing recessed portion 322 are recessed toward the first end portion 6a of the adapter 6. Note that a recessed amount of the second fixing recessed portion 312 toward the first end portion 6a may be the same as a recessed amount of the second non-fixing recessed portion 322 toward the first end portion 6a, and may be different from the recessed amount of the second non-fixing recessed portion 322 toward the first end portion 6a. The second fixing recessed portion 312 may be recessed more toward the first end portion 6a than the second non-fixing recessed portion 322, and may not be recessed more toward the first end portion 6a than the second non-fixing recessed portion 322.

As illustrated in FIG. 8, the adapter 6 includes a first slide portion 251, a second slide portion 252, a first locking projection 261, and a second locking projection 262. The first slide portion 251 and the first locking projection 261 are provided on the first end portion 6a of the adapter 6. Herein, the first slide portion 251 and the first locking projection 261 are provided on the frame 210 of the adapter body 200 (see FIG. 9). The first slide portion 251 is provided in a central portion of the first end portion 6a in the attaching and detaching direction D1 and extends in the attaching and detaching direction D1. The first slide portion 251 is arranged more forward than the first fixing recessed portion 311. The first slide portion 251 protrudes leftward from the first end portion 6a in the holding direction D2. Herein, the first slide portion 251 protrudes more leftward than the first projecting portion 301 in the holding direction D2.

The first locking projection 261 is provided on the front portion 6c of the adapter 6. Herein, the first locking projection 261 is arranged more forward than he first slide portion 251 and is continuous to the first slide portion 251. The first locking projection 261 protrudes leftward from the first end portion 6a in the holding direction D2, that is, in an opposite side to the second end portion 6b. Herein, the first locking projection 261 protrudes more leftward than the first projecting portion 301 in the holding direction D2 and also protrudes more leftward than the first slide portion 251 in the holding direction D2.

As illustrated in FIG. 8, the second slide portion 252 and the second locking projection 262 are provided on the second end portion 6b of the adapter 6 and are also provided on the frame 210 of the adapter body 200 (see FIG. 9). The second slide portion 252 is provided in a central portion of the second end portion 6b in the attaching and detaching direction D1 and extends in the attaching and detaching direction D1. The second slide portion 252 is arranged more forward than the second fixing recessed portion 312. A position of the second slide portion 252 in the attaching and detaching direction D1 is the same as a position of the first slide portion 251 in the attaching and detaching direction D1. The second slide portion 252 protrudes rightward from the second end portion 6b in the holding direction D2. Herein, the second slide portion 252 protrudes more rightward than the second projecting portion 302 in the holding direction D2.

Similar to the first locking projection 261, the second locking projection 262 is provided on the front portion 6c of the adapter 6. A position of the second locking projection 262 in the attaching and detaching direction D1 is the same as a position of the first locking projection 261 in the attaching and detaching direction D1. Herein, the second locking projection 262 is arranged more forward than the second slide portion 252 and is continuous to the second slide portion 252. The second locking projection 262 protrudes rightward from the second end portion 6b in the holding direction D2, that is, in an opposite side to the first end portion 6a. Herein, the second locking projection 262 protrudes more rightward than the second projecting portion 302 and the second slide portion 252 in the holding direction D2.

In the preferred embodiment, as illustrated in FIG. 8, the adapter 6 includes a first locking recessed portion 271 and a second locking recessed portion 272. The first locking recessed portion 271 and the second locking recessed portion 272 are arranged so as to be aligned in the holding direction D2. Herein, the first locking recessed portion 271 is arranged at left of the second locking recessed portion 272. The first locking recessed portion 271 and the second locking recessed portion 272 are provided on the rear portion 6d of the adapter 6, and specifically, are provided on a rear end portion of the adapter body 200. Herein, the first locking recessed portion 271 and the second locking recessed portion 272 are provided on the second plate 212 of the adapter body 200. The first locking recessed portion 271 and the second locking recessed portion 272 are arranged more rearward than the first non-fixing recessed portion 321 in the attaching and detaching direction D1 and also is arranged more rearward than the second non-fixing recessed portion 322 in the attaching and detaching direction D1. The first locking recessed portion 271 and the second locking recessed portion 272 are recessed forward from a rear end of the adapter body 200. There is no particular limitation on respective shapes of the first locking recessed portion 271 and the second locking recessed portion 272, but each of the first locking recessed portion 271 and the second locking recessed portion 272 has, for example, a semicircular shape.

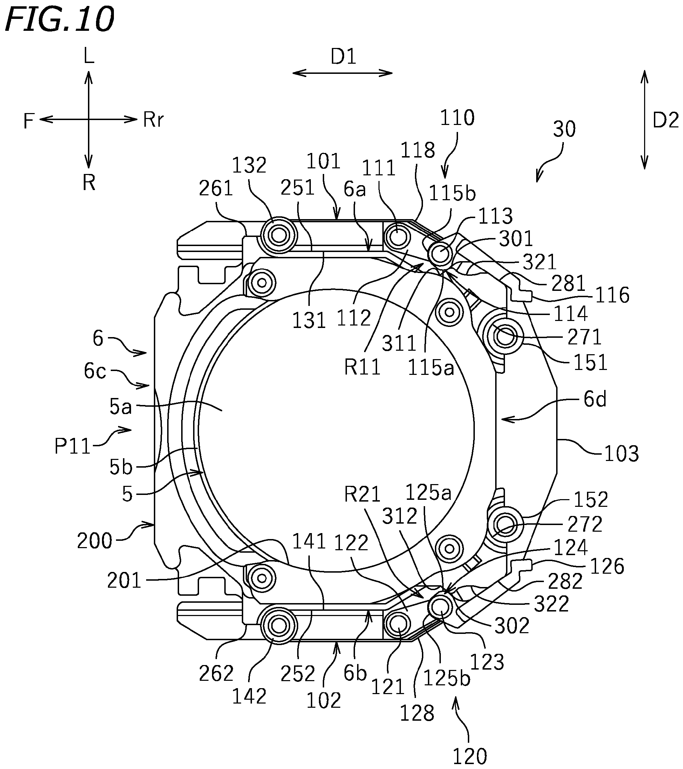

FIG. 10 is a plan view illustrating the workpiece 5 and the work holder 30 when the workpiece 5 is positioned in the holding position P11, illustrating a state where the work holder 30 holds the workpiece 5. As illustrated in FIG. 10, the work holder 30 according to this preferred embodiment holds the adapter 6 having a configuration described above, and thus, holds the workpiece 5 held by the adapter 6. The work holder 30 is configured to hold the workpiece 5 when the user manually moves the workpiece 5 from front to rear in the attaching and detaching direction D1 with respect to the work holder 30 and the workpiece 5 is arranged in the holding position P11. Next, a configuration of the work holder 30 will be described.

In this preferred embodiment, as illustrated in FIG. 7, the work holder 30 includes the first arm 101, the second arm 102, and the coupling portion 103. The first arm 101 and the second arm 102 extend in the attaching and detaching direction D1. The first arm 101 and the second arm 102 are arranged so as to be aligned in the holding direction D2. Herein, the first arm 101 is arranged at left of the second arm 102. As illustrated in FIG. 10, the workpiece 5 is arranged between the first arm 101 and the second arm 102 and is held by the first arm 101 and the second arm 102 such that the workpiece 5 is sandwiched between the first arm 101 and the second arm 102.

As illustrated in FIG. 7, the coupling portion 103 couples the first arm 101 and the second arm 102. The coupling portion 103 extends in the holding direction D2. Herein, a left end portion of the coupling portion 103 is connected to a rear end potion of the first arm 101. A right end potion of the coupling portion 103 is connected to a rear end portion of the second arm 102. Herein, the first arm 101, the second arm 102, and the coupling portion 103 form a lateral U-shape. In this preferred embodiment, as illustrated in FIG. 5, when the workpiece 5 is arranged in the holding position P11, the adapter 6 holding the workpiece 5 abuts on the coupling portion 103.

As illustrated in FIG. 7, the first arm 101 includes a first holding mechanism 110. The second arm 102 includes a second holding mechanism 120. In this preferred embodiment, as illustrated in FIG. 10, the workpiece 5 is held between the first holding mechanism 110 and the second holding mechanism 120, and thus, the workpiece 5 is held. The first holding mechanism 110 and the second holding mechanism 120 are arranged in the same position in the attaching and detaching direction D1. Herein, the first holding mechanism 110 and the second holding mechanism 120 are arranged, for example, in a rear portion that is one of two portions obtained when the work holder 30 is divided into equal two in the attaching and detaching direction D1. The first holding mechanism 110 and the second holding mechanism 120 are opposed to each other. Herein, the first holding mechanism 110 and the second holding mechanism 120 have configurations that correspond to each other.

In this preferred embodiment, as illustrated in FIG. 7, the first holding mechanism 110 includes a first rotation axis 111, a first swing member 112, a first fixing rotation axis 113, a first holding portion 114, a first lever 116, and a first elastic member 118. The first rotation axis 111 extends in the Z-axis direction. The first rotation axis 111 is provided on the first arm 101 and extends upward from an upper surface of the first arm 101 in the Z-axis direction. The first swing member 112 is provided on the first rotation axis 111 and is rotatable around the first rotation axis 111 as an axis. Herein, the first swing member 112 is a plate-like member extending in the front-rear direction. One end portion (herein, the front end portion) of the first swing member 112 is provided on the first rotation axis 111. The first swing member 112 obliquely extends from the first rotation axis 111 rearward and rightward. The first swing member 112 is rotatable around the first rotation axis 111 as an axis on the first arm 101.

The first fixing rotation axis 113 is provided on the other end portion (herein, a rear end portion) of the first swing member 112. The first fixing rotation axis 113 extends in the Z-axis direction. The first holding portion 114 is movable in the holding direction D2 (specifically, a direction to an opposite side to the second arm 102 in the holding direction D2). Herein, the first holding portion 114 is rotatable around the first rotation axis 111 as an axis and, as illustrated in FIG. 10, is a portion that holds the adapter 6 holding the workpiece 5. In this preferred embodiment, the first holding portion 114 is provided on the other end portion of the first swing member 112. Specifically, the first holding portion 114 is provided on the first fixing rotation axis 113 and is provided on the other end portion of the first swing member 112 via the first fixing rotation axis 113. The first holding portion 114 is configured to be rotatable with the first swing member 112 around the first rotation axis 111 as an axis.

In this preferred embodiment, as illustrated in FIG. 7, the first holding portion 114 is configured to be rotatable around the first fixing rotation axis 113 as an axis. The first holding portion 114 is configured to be arranged, in a state where the adapter 6 is not held by the work holder 30, in a position that the first projecting portion 301 of the adapter 6 passes when the workpiece 5 moves with respect to the work holder 30 toward the holding position P11 in the attaching and detaching direction D1. Herein, the first holding portion 114 is rotatable around the first fixing rotation axis 113 as an axis between a first fixing rotation position R11f (see FIG. 10) and a first non-fixing rotation position R12 (see FIG. 7). In this preferred embodiment, the first holding portion 114 has a shape that is eccentric to the first fixing rotation axis 113. Herein, a protrusion amount of the first holding portion 114 toward the second arm 102 differs between when the first holding portion 114 is in the first fixing rotation position R11 and when the first holding portion 114 is in the first non-fixing rotation position R12.

The first holding portion 114 includes a first fixing portion 115a and a first non-fixing portion 115b. As illustrated in FIG. 10, the first fixing portion 115a is a portion of the first holding portion 114 that protrudes from the first fixing rotation axis 113 toward the second arm 102 when the first holding portion 114 is in the first fixing rotation position R11. As illustrated in FIG. 7, the first non-fixing portion 115b is a portion of the first holding portion 114 that protrudes from the first fixing rotation axis 113 toward the second arm 102 when the first holding portion 114 is in the first non-fixing rotation position R12. Note that, as illustrated in FIG. 10, when the first holding portion 114 is in the first fixing rotation position R11, the first non-fixing portion 115b protrudes from the first fixing rotation axis 113 forward. As illustrated in FIG. 7, when the first holding portion 114 is in the first non-fixing rotation position R12, the first fixing portion 115a protrudes from the first fixing rotation axis 113 rearward. Herein, a protrusion amount of the first fixing portion 115a is larger than a protrusion amount of the first non-fixing portion 115b.

The first lever 116 is gripped by the user. The first lever 116 is provided on the first holding portion 114 and rotates the first holding portion 114 around the first fixing rotation axis 113. The first lever 116 has a bar-like shape. In this preferred embodiment, the first lever 116 is integrally formed with the first holding portion 114. As illustrated in FIG. 7, when the first holding portion 114 is in the first non-fixing rotation position R12, the first lever 116 obliquely extends from the first holding portion 114 rearward and toward a side (herein, the left side) away from the second arm 102. As illustrated in FIG. 10, when the first holding portion 114 is in the first fixing rotation position R11, the first lever 116 obliquely extends from the first holding portion 114 rearward and toward a side (herein, the right side) closer to the second arm 102. Therefore, the user can switch the rotation position of the first holding portion 114 from the first non-fixing rotation position R12 to the first fixing rotation position R11 by rotating the first lever 116 from left to right. On the other hand, the user can switch the rotation position of the first holding portion 114 from the first fixing rotation position R11 to the first non-fixing rotation position R12 by rotating the first lever 116 from right to left.

Note that, in this preferred embodiment, as illustrated in FIG. 10, the adapter 6 includes a first stopper 281 provided on the first end portion 6a. The first stopper 281 is provided on the rear portion 6d of the adapter 6 and is arranged more rearward than the first non-fixing recessed portion 321. The first stopper 281 is a flat plane that faces rearward and leftward and extends in the Z-axis direction. Herein, the first lever 116 is configured to contact the first stopper 281 when the workpiece 5 is positioned in the holding position P11 and the rotation position of the first holding portion 114 of the first arm 101 is the first fixing rotation position R11.

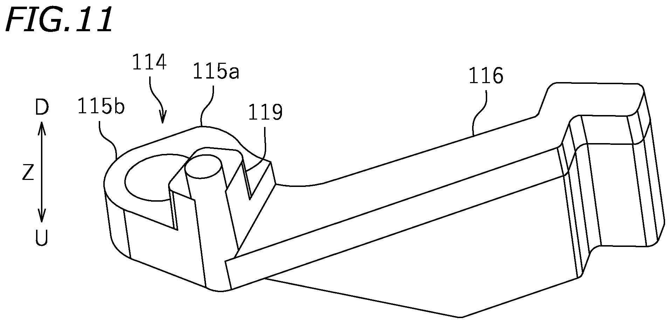

As illustrated in FIG. 10, the first elastic member 118 applies a pressing force to the first holding portion 114 toward the second arm 102. Although there is no particular limitation on a type of the first elastic member 118, the first elastic member 118 is a plate spring herein. The first elastic member 118 is provided on a left side surface of the first arm 101 and applies a pressing force to the first holding portion 114 from left. Herein, the pressing force is an elastic force of the first elastic member 118. FIG. 11 is a perspective view illustrating the first holding portion 114, the first lever 116, and a first pressed portion 119. In this preferred embodiment, as illustrated in FIG. 11, the first pressed portion 119 is provided on the first holding portion 114. The pressed portion 119 extends, for example, downward from the first holding portion 114 and, as illustrated in FIG. 7, is sandwiched between the first elastic member 118 and the first swing member 112. The first elastic member 118 presses the pressed portion 119 toward the second arm 102, and thus, the first holding portion 114 rotates with the first swing member 112 around the first rotation axis 111 and is pressed toward the second arm 102. When a force that is in an opposite direction to the pressing force of the first elastic member 118 and is larger than the pressing force is applied to the first holding portion 114, the first holding portion 114 rotates around the first rotation axis 111 against the pressing force and moves toward an opposite side to the second arm 102. Then, when the force in the opposite direction to the pressing force is no longer applied to the first holding portion 114, the first holding portion 114 is moved toward the second arm 102 by the pressing force.

Note that the second holding mechanism 120 provided on the second arm 102 has a configuration corresponding to the first holding mechanism 110. Herein, as illustrated in FIG. 7, the second holding mechanism 120 includes a second rotation axis 121, a second swing member 122, a second fixing rotation axis 123, a second holding portion 124, a second lever 126, and a second elastic member 128. The second rotation axis 121 extends upward in the Z-axis direction from an upper surface of the second arm 102. The second swing member 122 is provided on the second rotation axis 121 and is rotatable around the second rotation axis 121 as an axis. Herein, the second swing member 122 is a member having a plate-like shape extending in the front-rear direction and one end portion (herein, a front end portion) thereof is provided on the second rotation axis 121. The second swing member 122 obliquely extends from the second rotation axis 121 rearward and leftward on the second arm 102.

The second fixing rotation axis 123 extending in the Z-axis direction is provided on the other end portion (herein, a rear end portion) of the second swing member 122. The second holding portion 124 is rotatable around the second rotation axis 121 as an axis. As illustrated in FIG. 10, the second holding portion 124 is a portion that holds the adapter 6 holding the workpiece 5 with the first holding portion 114 such that the workpiece 5 is sandwiched between the first holding portion 114 and the second holding portion 124. The second holding portion 124 is movable in the holding direction D2 (specifically, a direction to the opposite side to the first arm 101 in the holding direction D2). Herein, in this preferred embodiment, the second holding portion 124 is provided on the second fixing rotation axis 123, and is provided on the other end of the second swing member 122 via the second fixing rotation axis 123. The second holding portion 124 is configured to be rotatable with the second swing member 122 around the second rotation axis 121 as an axis.

The second holding portion 124 is configured to be arranged, in a state where the adapter 6 is not held by the work holder 30, in a position that the second projecting portion 302 of the adapter 6 passes when the workpiece 5 moves with respect to the work holder 30 toward the holding position P11 in the attaching and detaching direction D1. In this preferred embodiment, the second holding portion 124 is configured to be rotatable around the second fixing rotation axis 123 as an axis between a second fixing rotation position R21 (see FIG. 10) and a second non-fixing rotation position R22 (see FIG. 7). In this preferred embodiment, the second holding portion 124 has a shape that is eccentric to the second fixing rotation axis 123. Herein, a protrusion amount of the second holding portion 124 toward the first arm 101 differs between when the second holding portion 124 is in the second fixing rotation position R21 and when the second holding portion 124 is in the second non-fixing rotation position R22.

As illustrated in FIG. 7, the second holding portion 124 includes a second fixing portion 125a and a second non-fixing portion 125b. As illustrated in FIG. 10, the second fixing portion 125a is a portion of the second holding portion 124 that protrudes from the second fixing rotation axis 123 toward the first arm 101 when the second holding portion 124 is in the second fixing rotation position R21. As illustrated in FIG. 7, the second non-fixing portion 125b is a portion of the second holding portion 124 that protrudes from the second fixing rotation axis 123 toward the first arm 101 when the second holding portion 124 is in the second non-fixing rotation position R22. Note that, as illustrated in FIG. 10, when the second holding portion 124 is in the second fixing rotation position R21, the second non-fixing portion 125b protrudes from the second fixing rotation axis 123 forward. As illustrated in FIG. 7, when the second holding portion 124 is in the second non-fixing rotation position R22, the second fixing portion 125a protrudes from the second fixing rotation axis 123 rearward. Herein, a protrusion amount of the second fixing portion 125a is larger than a protrusion amount of the second non-fixing portion 125b.

The second lever 126 is gripped by the user. The second lever 126 is provided in the second holding portion 124 and rotates the second holding portion 124 around the second fixing rotation axis 123. Similar to the first lever 116, the second lever 126 has a bar-like shape. In this preferred embodiment, the second lever 126 is integrally formed with the second holding portion 124. As illustrated in FIG. 7, when the second holding portion 124 is in the second non-fixing rotation position R22, the second lever 126 obliquely extends from the second holding portion 124 rearward and toward a side (herein, the right side) away from the first arm 101. As illustrated in FIG. 10, when the second holding portion 124 is in the second fixing rotation position R21, the second lever 126 obliquely extends from the second holding portion 124 rearward and toward a side (herein, the left side) closer to the first arm 101. Therefore, the user can switch the rotation position of the second holding portion 124 from the second non-fixing rotation position R22 to the second fixing rotation position R21 by rotating the second lever 126 from right to left.

Note that, in this preferred embodiment, the adapter 6 includes a second stopper 282 provided on the second end portion 6b. The second stopper 282 is provided in the rear portion 6d of the adapter 6 and is arranged more rearward than the second non-fixing recessed portion 322. The second stopper 282 is a flat plane that faces rearward and rightward and extends in the Z-axis direction. Herein, as illustrated in FIG. 10, the second lever 126 is configured to contact the second stopper 282 when the workpiece 5 is positioned in the holding position P11 and the rotation position of the second holding portion 124 of the second arm 102 is the second fixing rotation position R21.

The second elastic member 128 applies a pressing force to the second holding portion 124 toward the first arm 101. Although there is no particular limitation on a type of the second elastic member 128, similar to the first elastic member 118, the second elastic member 128 is a plate spring herein. The second elastic member 128 is provided on a right side surface of the second arm 102 and applies the pressing force to the second holding portion 124 from right. In this preferred embodiment, a second pressed portion 129 (see FIG. 7) that is similar to the first pressed portion 119 (see FIG. 11) is provided on the second holding portion 124. The second pressed portion 129 extends, for example, downward from the second holding portion 124 and is sandwiched between the second elastic member 128 and the second swing member 122. The second elastic member 128 presses the second pressed portion 129 toward the first arm 101, and thus, the second holding portion 124 rotates with the second swing member 122 around the second rotation axis 121 and is pressed toward the first arm 101. When a force that is in an opposite direction to the pressing force of the second elastic member 128 and is larger than the pressing force is applied to the second holding portion 124, the second holding portion 124 rotates around the second rotation axis 121 against the pressing force and moves toward an opposite side to the first arm 101. Then, when the force in the opposite direction to the pressing force is no longer applied to the second holding portion 124, the second holding portion 124 is moved toward the first arm 101 by the pressing force.

In this preferred embodiment, as illustrated in FIG. 7, in a state where the adapter 6 is not held by the work holder 30 (that is, a state where the workpiece 5 is positioned in the non-holding position P12), a distance between the first holding portion 114 and the second holding portion 124 in the holding direction D2 is referred to as a first distance D11. The first distance D11 is a distance between a right end of the first holding portion 114 and a left end of the second holding portion 124 in the holding direction D2. The first distance D11 is a distance between the first non-fixing portion 115b of the first holding portion 114 (specifically, a right end of the first non-fixing portion 115b) and the second non-fixing portion 125b of the second holding portion 124 (specifically, a left end of the second non-fixing portion 125b) when the first holding portion 114 is in the first non-fixing rotation position R12 and the second holding portion 124 is in the second non-fixing rotation position R22.

As illustrated in FIG. 7, in the adapter 6, a distance between the first projecting portion 301 and the second projecting portion 302 in the holding direction D2 is referred to as a second distance D12. Specifically, the second distance D12 is a distance between a left end of the first projecting portion 301 and a right end of the second projecting portion 302 in the holding direction D2. Herein, the first distance D11 is shorter than the second distance D12. Herein, the first distance D11 is slightly shorter than the second distance D12.

In this preferred embodiment, in the adapter 6, a distance between the first non-fixing recessed portion 321 and the second non-fixing recessed portion 322 in the holding direction D2 is referred to as a third direction D13. The third direction D13 is a distance between a right end of the first non-fixing recessed portion 321 and a left end of the second non-fixing recessed portion 322 in the holding direction D2. Furthermore, in the adapter 6, a distance between the first fixing recessed portion 311 and the second fixing recessed portion 312 in the holding direction D2 is referred to as the fourth distance D14. The fourth distance D14 is a distance between a right end of the first fixing recessed portion 311 and a left end of the second fixing recessed portion 312 in the holding direction D2. In this preferred embodiment, the third direction D13 is shorter than the first distance D11. The fourth distance D14 is shorter than the first distance D11. Herein, each of the third direction D13 and the fourth distance D14 is slightly shorter than the first distance D11. Each of the third direction D13 and the fourth distance D14 is shorter than the second distance D12. The third direction D13 and the fourth distance D14 is the same. However, the third direction D13 may be different from the fourth distance D14. For example, the third direction D13 may be shorter than the fourth distance D14, and may be longer than the fourth distance D14.

In this preferred embodiment, as illustrated in FIG. 7, the first arm 101 includes a first slide-mating portion 131 and a first guide roller 132. The second arm 102 includes a second slide-mating portion 141 and a second guide roller 142. The first slide-mating portion 131 and the first guide roller 132 are arranged more forward than the first holding mechanism 110. The first slide-mating portion 131 is a portion that extends in the attaching and detaching direction D1 and on which the first slide portion 251 of the adapter 6 holding the workpiece 5 slides and moves while contacting thereto in attaching and detaching the workpiece 5 to and from the work holder 30. The first guide roller 132 is provided on the first slide-mating portion 131. The first guide roller 132 is configured to be rotatable with respect to the first slide-mating portion 131, and guides slide movement of the first slide portion 251 of the adapter 6. Herein, the first slide portion 251 contacts the first guide roller 132 when the first slide portion 251 slides and moves on the first slide-mating portion 131. At this time, the first guide roller 132 rotates as the first slide portion 251 moves. In this preferred embodiment, as illustrated in FIG. 10, when the workpiece 5 is arranged in the holding position P11, the first locking projection 261 of the adapter 6 contacts the first guide roller 132 to lock.

As illustrated in FIG. 7, the second slide-mating portion 141 and the second guide roller 142 are arranged more forward than the second holding mechanism 120. The second slide-mating portion 141 is a portion that extends in the attaching and detaching direction D1 and on which the second slide portion 252 of the adapter 6 slides and moves while contacting thereto in attaching and detaching the workpiece 5 to and from the work holder 30. The second guide roller 142 is provided on the second slide-mating portion 141. The second guide roller 142 is configured to be rotatable with respect to the second slide-mating portion 141, and guides slide movement of the second slide portion 252 of the adapter 6. Herein, the second slide portion 252 contacts the second guide roller 142 when the second slide portion 252 slides and moves on the second slide-mating portion 141. At this time, the second guide roller 142 rotates as the second slide portion 252 moves. In this preferred embodiment, as illustrated in FIG. 10, when the workpiece 5 is arranged in the holding position P11, the second locking projection 262 of the adapter 6 contacts the second guide roller 142 to lock.

In this preferred embodiment, as illustrated in FIG. 7, the coupling portion 103 includes a first fitting portion 151 and a second fitting portion 152. The first fitting portion 151 and the second fitting portion 152 are provided on an upper surface of the coupling portion 103. The first fitting portion 151 and the second fitting portion 152 are arranged so as to be aligned in the holding direction D2. In this preferred embodiment, the first fitting portion 151 and the second fitting portion 152 are rollers that are rotatable with respect to the coupling portion 103. However, there is no particular limitation on types of the first fitting portion 151 and the second fitting portion 152. Herein, as illustrated in FIG. 10, when the workpiece 5 is arranged in the holding position P11, the first fitting portion 151 is fitted to the first locking recessed portion 271 of the adapter 6. At this time, the second fitting portion 152 is fitted to the second locking recessed portion 272 of the adapter 6.

A configuration of the work holder 30 has been described above. Next, steps taken by the user to manually attach the workpiece 5 to the work holder 30 to cause the work holder 30 to hold the workpiece 5 and detach the workpiece 5 from the work holder 30 will be described. Herein, in attaching the workpiece 5 to the work holder 30, the work holder 30 is arranged in the replacement position P4 in the cutting area A1 (see FIG. 6). As illustrated in FIG. 4, first, the user slides the slide cover 60 upward to open the first opening 12a formed in the case body 10. At this time, through the first opening 12a, the cutting area A1 and the outside of the cutting machine 100 are communicated with each other. The user can put his or her hands holding the workpiece 5 into the cutting area A1 from the first opening 12a to attach the workpiece 5 to the work holder 30.

When the user manually attaches the workpiece 5 to the work holder 30, as illustrated in FIG. 7, the workpiece 5 held by the adapter 6 is arranged in a position in front of the work holder 30, that is, the non-holding position P12 herein. At this time, while the first end portion 6a of the adapter 6 is positioned at a first arm 101 side and the second end portion 6b is positioned at a second arm 102 side, the workpiece 5 is in an orientation in which the first holding mechanism 110 and the second holding mechanism 120 are positioned more rearward than the first slide portion 251 and the second slide portion 252. In the work holder 30, the rotation position of the first holding portion 114 is the first non-fixing rotation position R12 and the rotation position of the second holding portion 124 is the second non-fixing rotation position R22. In the state described above, the user moves the workpiece 5 rearward in the attaching and detaching direction D1, as indicated by an arrow A20 of FIG. 7, toward a position between the first arm 101 and the second arm 102. Herein, the user moves the workpiece 5 from the non-holding position P12 to the holding position P11 (see FIG. 10).

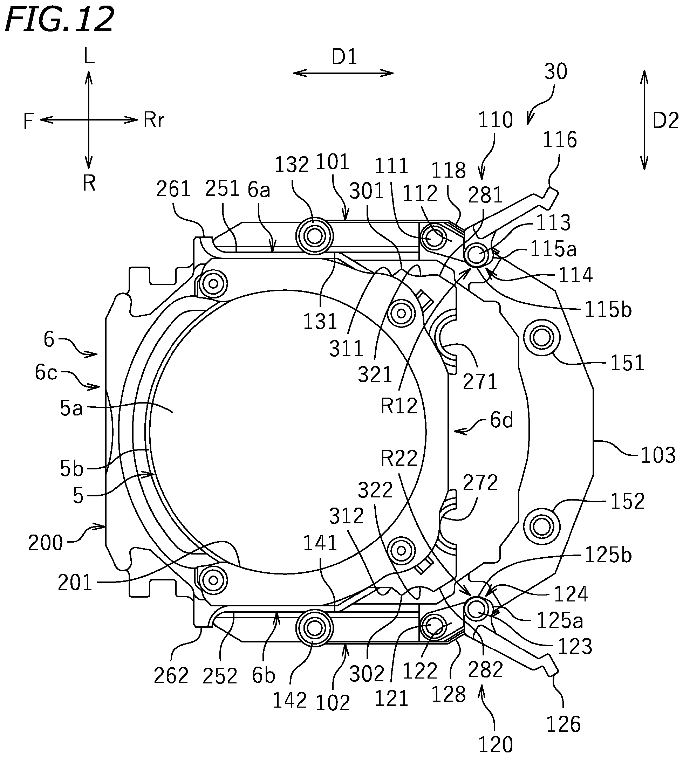

FIG. 12 is a plan view illustrating a state where the workpiece 5 slides and moves with respect to the work holder 30. When the workpiece 5 moves rearward in the attaching and detaching direction D1 toward the holding position P11, as illustrated in FIG. 12, the first slide portion 251 of the adapter 6 slides and moves on the first slide-mating portion 131 while contacting the first slide-mating portion 131 of the first arm 101. At this time, the first slide portion 251 may contact the first guide roller 132. The first slide portion 251 moves while contacting the first guide roller 132, and thus, the first guide roller 132 can guide movement of the first slide portion 251. When the workpiece 5 moves rearward in the attaching and detaching direction D1, the second slide portion 252 of the adapter 6 slides and moves on the second slide-mating portion 141 while contacting the second slide-mating portion 141 of the second arm 102. At this time, the second slide portion 252 may slide and move while contacting the second guide roller 142. Thus, the second guide roller 142 can guide movement of the second slide portion 252.

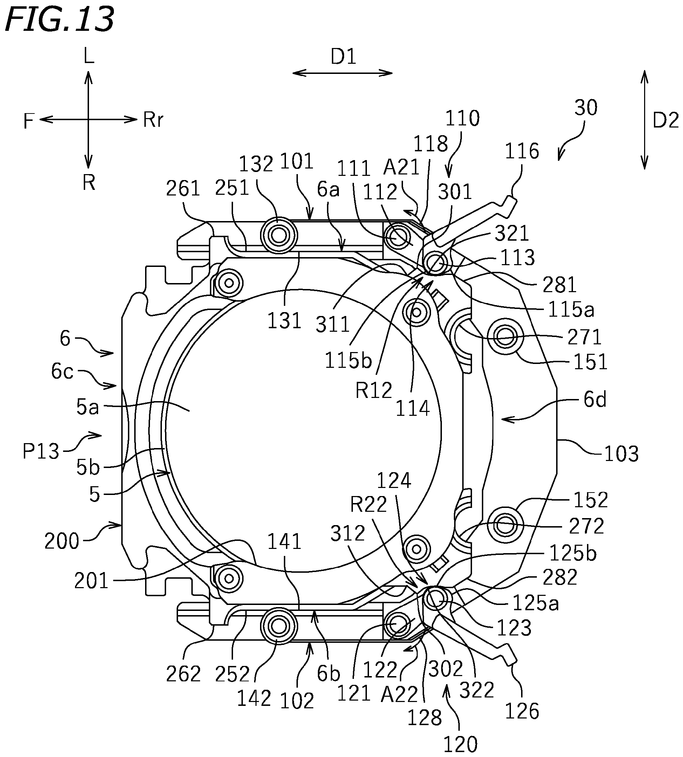

FIG. 13 is a plan view illustrating the workpiece 5 and the work holder 30 when the workpiece 5 is positioned in a middle position P13. As described above, when the workpiece 5 slides and moves rearward in the attaching and detaching direction D1 along the first slide-mating portion 131 and the second slide-mating portion 141 of the work holder 30, the first projecting portion 301 of the adapter 6 contacts the first holding portion 114 of the first arm 101 and the second projecting portion 302 contacts the second holding portion 124 of the second arm 102, as illustrated in FIG. 13. As described above, as illustrated in FIG. 7, the first distance D11 between the first holding portion 114 and the second holding portion 124 in the holding direction D2 is shorter than the second distance D12 between the first projecting portion 301 and the second projecting portion 302 of the adapter 6 in the holding direction D2, and therefore, as illustrated in FIG. 13, the adapter 6 contacts the first holding portion 114 and the second holding portion 124. Specifically, the first non-fixing portion 115b of the first holding portion 114 contacts the first projecting portion 301 and the second non-fixing portion 125b of the second holding portion 124 contacts the second projecting portion 302. Thus, movement of the workpiece 5 in the attaching and detaching direction D1 is regulated.

As described above, a position of the workpiece 5 with respect to the work holder 30 when the adapter 6 holding the workpiece 5 contacts the first holding portion 114 and the second holding portion 124 is referred to as the middle position P13. The middle position P13 is a position where the workpiece 5 is in middle of moving in the attaching and detaching direction D1 toward the holding position P11. The middle position P13 is poisoned in rear of the non-holding position P12 and in front of the holding position P11.

Note that, when the workpiece 5 is positioned in the middle position P13, the first non-fixing recessed portion 321 of the adapter 6 is arranged at right of the first holding portion 114 of the first arm 101 and the second non-fixing recessed portion 322 of the adapter 6 is arranged at left of the second holding portion 124 of the second arm 102. In this preferred embodiment, as illustrated in FIG. 7, the third direction D13 between the first non-fixing recessed portion 321 and the second non-fixing recessed portion 322 in the holding direction D2 is shorter than the first distance D11. Therefore, as illustrated in FIG. 13, when the workpiece 5 is positioned in the middle position P13, the first holding portion 114 does not contact the first non-fixing recessed portion 321 and the second holding portion 124 does not contact the second non-fixing recessed portion 322.

The user further applies a force to the workpiece 5 rearward in the attaching and detaching direction D1 in the middle position P13, and thus, the workpiece 5 passes the middle position P13. At this time, the first holding portion 114 is pressed by the first projecting portion 301 and thus rotates leftward around the first rotation axis 111 as an axis as indicated by an arrow A21 against a pressing force applied from the first elastic member 118, and the second holding portion 124 is pressed by the second projecting portion 302 and thus rotates rightward around the second rotation axis 121 as an axis as indicated by an arrow A22 against a pressing force applied from the second elastic member 128. At this time, a space between the first holding portion 114 and the second holding portion 124 is increased, so that each of the first projecting portion 301 and the second projecting portion 302 of the adapter 6 passes between the first holding portion 114 and the second holding portion 124 while contacting a corresponding one of the first holding portion 114 and the second holding portion 124.

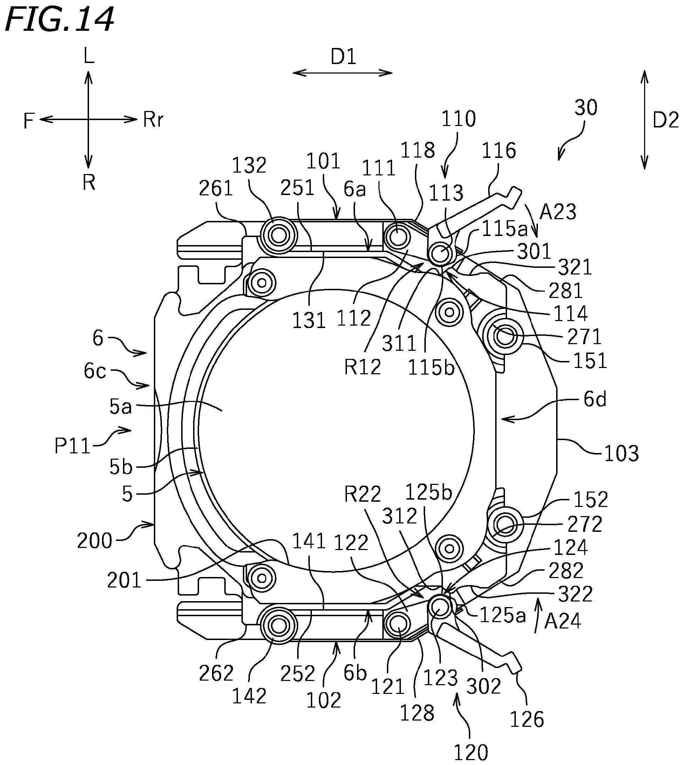

FIG. 14 is a plan view illustrating the workpiece 5 and the work holder 30 when the workpiece 5 is positioned in the holding position P11, illustrating a state where the rotation position of the first holding portion 114 is the first non-fixing rotation position R12, and the rotation position of the second holding portion 124 is the second non-fixing rotation position R22. In a manner described above, when the workpiece 5 passes the middle position P13, as illustrated in FIG. 14, the workpiece 5 is positioned in the holding position P11. At this time, the rotation position of the first holding portion 114 is the first non-fixing rotation position R12 and the rotation position of the second holding portion 124 is the second non-fixing rotation position R22. Therefore, when the workpiece 5 is positioned in the holding position P11, the first fixing recessed portion 311 of the adapter 6 is arranged at right of the first holding portion 114 (specifically, the first non-fixing portion 115b) and the second fixing recessed portion 312 of the adapter 6 is arranged at left of the second holding portion 124 (specifically, the second non-fixing portion 125b). Herein, as illustrated in FIG. 7, the fourth distance D14 between the first fixing recessed portion 311 and the second fixing recessed portion 312 in the holding direction D2 is shorter than the first distance D11. Thus, as illustrated in FIG. 14, the first fixing recessed portion 311 does not contact the first holding portion 114 (herein, the first non-fixing portion 115b) and the second fixing recessed portion 312 does not contact the second holding portion 124 (herein, the second non-fixing portion 125b).

Note that, as illustrated in FIG. 14, when the workpiece 5 is positioned in the holding position P11, the first locking projection 261 of the adapter 6 abuts on the first guide roller 132 of the first arm 101 and the second locking projection 262 of the adapter 6 abuts on the second guide roller 142 of the second arm 102. When the workpiece 5 is positioned in the holding position P11, the first fitting portion 151 and the second fitting portion 152 of the coupling portion 103 are fitted to the first locking recessed portion 271 and the second locking recessed portion 272 of the adapter 6, respectively. Thus, movement of the workpiece 5 can be regulated such that the workpiece 5 does not move more rearward than the holding position P11.

As described above, after the workpiece 5 is positioned in the holding position P11, the user operates the first lever 116 as indicated by an arrow A23 of FIG. 14 such that the first holding portion 114 rotates from the first non-fixing rotation position R12 to the first fixing rotation position R11 (see FIG. 10). Similarly, the user operates the second lever 126 as indicated by an arrow A24 of FIG. 14 such that the second holding portion 124 rotates from the second non-fixing rotation position R22 to the second fixing rotation position R21 (see FIG. 10). Thus, as illustrated in FIG. 10, the first fixing portion 115a of the first holding portion 114 contacts the first fixing recessed portion 311 of the adapter 6 and is pressed against the first fixing recessed portion 311. Similarly, the second fixing portion 125a of the second holding portion 124 contacts the second fixing recessed portion 312 of the adapter 6 and is pressed against the second fixing recessed portion 312. Accordingly, the workpiece 5 is held between the first holding portion 114 and the second holding portion 124 and the position of the workpiece 5 with respect to the work holder 30 is fixed. Therefore, the work holder 30 can hold the workpiece 5. Note that, when the rotation position of the first holding portion 114 is the first fixing rotation position R11, the first lever 116 contacts the first stopper 281 of the adapter 6 and rightward movement is regulated. When the rotation position of the second holding portion 124 is the second fixing rotation position R21, the second lever 126 contacts the second stopper 282 of the adapter 6 and leftward movement is regulated.

Note that, in detaching the workpiece 5 from the work holder 30, the steps taken to attach the workpiece 5 to the work holder 30 described above may be performed in a reverse order. Detailed description will be omitted, but in detaching the workpiece 5 from the work holder 30, as illustrated in FIG. 14, in a state where the workpiece 5 is positioned in the holding position P11, the user operates the first lever 116 and the second lever 126 to rotate the first holding portion 114 from the first fixing rotation position R11 to the first non-fixing rotation position R12 and the second holding portion 124 from the second fixing rotation position R21 to the second non-fixing rotation position R22. Thus, a holding state where the workpiece 5 is held by the first holding portion 114 and the second holding portion 124 is released.

Thereafter, the user pulls out the workpiece 5 forward in the attaching and detaching direction D1 such that the workpiece 5 moves from the holding position P11 toward the non-holding position P12. Herein, when the workpiece 5 passes the middle position P13, the first projecting portion 301 and the second projecting portion 302 of the adapter 6 contact the first holding portion 114 and the second holding portion 124, respectively. At this time, the user further applies a force to the workpiece 5 forward in the attaching and detaching direction D1. Thus, the first holding portion 114 and the second holding portion 124 are pressed by the first projecting portion 301 and the second projecting portion 302, respectively, so that the space between the first holding portion 114 and the second holding portion 124 is increased. Accordingly, the workpiece 5 can pass the middle position P13.

After the workpiece 5 passes the middle position P13, as illustrated in FIG. 12, the workpiece 5 moves forward in the attaching and detaching direction D1 while the first slide portion 251 slides and moves on the first slide-mating portion 131 of the first arm 101 and the second slide portion 252 slides and moves on the second slide-mating portion 141 of the second arm 102. Then, as illustrated in FIG. 7, the workpiece 5 is positioned in the non-holding position P12, so that the workpiece 5 is arranged in front of the work holder 30. Thus, the user can manually detach the workpiece 5 from the work holder 30.

As has been described above, in this preferred embodiment, as illustrated in FIG. 5, the cutting machine 100 includes the work holder 30 that is an example of the holding device that holds the adapter 6 that holds the workpiece 5 in cutting the workpiece 5. The work holder 30 is configured to hold the workpiece 5 when the user manually moves the workpiece 5 with respect to the work holder 30 from one side (herein, the front side) to the other side (herein, the rear side) in the attaching and detaching direction D1 and, as illustrated in FIG. 10, the workpiece 5 is arranged in the holding position P11 with respect to the work holder 30. The work holder 30 includes the first arm 101, the second arm 102, and the coupling portion 103. The first arm 101 extends in the attaching and detaching direction D1. The second arm 102 is arranged so as to be aligned with the first arm 101 in the holding direction D2 that intersects the attaching and detaching direction D1, extends in the attaching and detaching direction D1, and holds the workpiece 5 with the first arm 101 such that the workpiece 5 is sandwiched between the first arm 101 and the second arm 102. The coupling portion 103 couples the end portion (herein, the rear end portion) of the first arm 101 in the other side in the attaching and detaching direction D1 and the end portion (herein, the rear end portion) of the second arm 102 in the other side in the attaching and detaching direction D1. As illustrated in FIG. 8, the adapter 6 includes the first projecting portion 301 that is provided on the first end portion 6a in one side in the holding direction D2 and protrudes toward the one side (herein, the left side) in the holding direction D2 and the second projecting portion 302 that is provided on the second end portion 6b in the other side in the holding direction D2 and protrudes toward the other side (herein, the right side) in the holding direction D2. As illustrated in FIG. 7, the first arm 101 includes the first holding portion 114 that is movable in the holding direction D2 and the first elastic member 118 that applies a pressing force to the first holding portion 114 toward the second arm 102. The second arm 102 includes the second holding portion 124 that is movable in the holding direction D2 and the second elastic member 128 that applies a pressing force to the second holding portion 124 toward the first arm 101. In a state where the adapter 6 is not held by the work holder 30, the first holding portion 114 is arranged in the position that the first projecting portion 301 of the adapter 6 passes when the workpiece 5 moves with respect to the work holder 30 toward the holding position P11 in the attaching and detaching direction D1. In a state where the adapter 6 is not held by the work holder 30, the second holding portion 124 is arranged in a position that the second projecting portion 302 of the adapter 6 passes when the workpiece 5 moves with respect to the work holder 30 toward the holding position P11 in the attaching and detaching direction D1. The first distance D11 between the first holding portion 114 and the second holding portion 124 in the holding direction D2 is shorter than the second distance D12 between the first projecting portion 301 and the second projecting portion 302 of the adapter 6 in the holding direction D2. As illustrated in FIG. 13, the work holder 30 is configured such that, with respect to the work holder 30, when the workpiece 5 passes the middle position P13 that is a position in which the workpiece 5 is middle of moving toward the holding position P11 (see FIG. 10) in the attaching and detaching direction D1 and a position that proceeds from the holding position P11 in one side (herein, the front side) in the attaching and detaching direction D1, the first projecting portion 301 of the adapter 6 contacts the first holding portion 114 and the second projecting portion 302 of the adapter 6 contacts the second holding portion 124.

Thus, in attaching the workpiece 5 to the work holder 30 and causing the work holder 30 to hold the workpiece 5, the user moves the workpiece 5 in the attaching and detaching direction D1 toward the holding position P11. Herein, when the workpiece 5 passes the middle position P13, the user applies a force to the workpiece 5 toward the holding position P11, and thus, the first projecting portion 301 and the second projecting portion 302 of the adapter 6 are pressed against the first holding portion 114 and the second holding portion 124, respectively, so that the first holding portion 114 moves to the opposite side to the second holding portion 124, the second holding portion 124 moves to the opposite side to the first holding portion 114 and the space between the first holding portion 114 and the second holding portion 124 is increased. Thus, when the workpiece 5 passes the middle position P13 and, as illustrated in FIG. 10, is positioned in the holding position P11, the work holder 30 can hold the workpiece 5. As described above, in this preferred embodiment, when the workpiece 5 passes the middle position P13, a feeling that the user applies a force to the workpiece 5 is given to the user, and thus, the user can properly arrange the workpiece 5 in the holding position P11. Therefore, the user can easily sensitively recognize that the workpiece 5 is properly attached to the work holder 30.

In this preferred embodiment, the first holding portion 114 is rotatable around the first rotation axis 111 as an axis. The second holding portion 124 is rotatable around the second rotation axis 121 as an axis. Herein, the first holding portion 114 can be moved in the holding direction D2 (specifically, in the direction to the opposite side to the second arm 102 in the holding direction D2) by rotating the first holding portion 114 around the first rotation axis 111 as an axis. Similarly, the second holding portion 124 can be moved in the holding direction D2 (specifically, the direction to the opposite side to the first arm 101 in the holding direction D2) by rotating the second holding portion 124 around the second rotation axis 121 as an axis.

In this preferred embodiment, as illustrated in FIG. 8, the adapter 6 includes the first fixing recessed portion 311 provided on the first end portion 6a in a position that proceeds from the first projecting portion 301 in one side (herein, the front side) in the attaching and detaching direction D1 and recessed toward the second end portion 6b and the second fixing recessed portion 312 provided on the second end portion 6b in a position that proceeds from than the second projecting portion 302 in one side in the attaching and detaching direction D1 and recessed toward the first end portion 6a. As illustrated in FIG. 10, when the workpiece 5 is positioned in the holding position P11, the first holding portion 114 is fitted to the first fixing recessed portion 311 of the adapter 6 and the second holding portion 124 is fitted to the second fixing recessed portion 312 of the adapter 6. As described above, when the workpiece 5 is positioned in the holding position P11, the first holding portion 114 and the second holding portion 124 are fitted to the first fixing recessed portion 311 and the second fixing recessed portion 312, respectively, so that the workpiece 5 is held between the first holding portion 114 and the second holding portion 124 and the position of the workpiece 5 is fixed. Therefore, the workpiece 5 is held between the first holding portion 114 and the second holding portion 124, and thus, the work holder 30 can hold the workpiece 5.

In this preferred embodiment, as illustrated in FIG. 8, the adapter 6 includes the first non-fixing recessed portion 321 provided on the first end portion 6a in a position that proceeds from the first projecting portion 301 in the other side (herein, the rear side) in the attaching and detaching direction D1 and recessed toward the second end portion 6b and the second non-fixing recessed portion 322 provided on the second end portion 6b in a position that proceeds from the second projecting portion 302 in the other side in the attaching and detaching direction D1 and recessed toward the first end portion 6a. As illustrated in FIG. 7, the third direction D13 between the first non-fixing recessed portion 321 and the second non-fixing recessed portion 322 in the holding direction D2 is shorter than the first distance D11. Thus, as illustrated in FIG. 13, when the workpiece 5 is positioned in the middle position P13, a state where the first holding portion 114 does not contact the first non-fixing recessed portion 321 and the second holding portion 124 does not contact the second non-fixing recessed portion 322 can be achieved. Therefore, when the workpiece 5 is positioned in the middle position P13, a state where the first holding portion 114 contacts only the first projecting portion 301 and the second holding portion 124 contacts only the second projecting portion 302 can be achieved.

In this preferred embodiment, as illustrated in FIG. 7, the first arm 101 includes the first swing member 112 one end portion of which is provided on the first rotation axis 111 and the other end portion of which is provided on the first holding portion 114. The second arm 102 includes the second swing member 122 one end portion of which is provided on the second rotation axis 121 and the other end portion of which is provided on the second holding portion 124. Thus, as illustrated in FIG. 13, when a force against the pressing force of the first elastic member 118 is applied to the first holding portion 114, the first holding portion 114 can rotate with the first swing member 112 around the first rotation axis 111 as indicated by the arrow A21. When a force against the pressing force of the second elastic member 128 is applied to the second holding portion 124, the second holding portion 124 can rotate with the second swing member 122 around the second rotation axis 121 as indicated by the arrow A22. Accordingly, when the workpiece 5 passes the middle position P13, the space between the first holding portion 114 and the second holding portion 124 can be increased.

In this preferred embodiment, as illustrated in FIG. 7, the first arm 101 includes the first fixing rotation axis 113 provided on the other end portion of the first swing member 112. The first holding portion 114 is provided on the first fixing rotation axis 113 and is configured to be rotatable around the first fixing rotation axis 113 as an axis. The first holding portion 114 is rotatable around the first fixing rotation axis 113 as an axis between the first fixing rotation position R11 (see FIG. 10) and the first non-fixing rotation position R12 (see FIG. 7). The first holding portion 114 includes the first non-fixing portion 115b and the first fixing portion 115a. The first non-fixing portion 115b is a portion positioned at the second arm 102 side when the first holding portion 114 is in the first non-fixing rotation position R12, as illustrated in FIG. 7. The first fixing portion 115a is a portion positioned at the second arm 102 side when the first holding portion 114 is in the first fixing rotation position R11, as illustrated in FIG. 10, and protrudes more toward the second arm 102 than the first non-fixing portion 115b when the first holding portion 114 is in the first non-fixing rotation position R12. Thus, as illustrated in FIG. 14, when the workpiece 5 is positioned in the holding position P11, the first holding portion 114 is rotated from the first non-fixing rotation position R12 to the first fixing rotation position R11 as indicated by the arrow A23. Accordingly, as illustrated in FIG. 10, the first fixing portion 115a of the first holding portion 114 can be caused to contact the first end portion 6a (specifically, the first fixing recessed portion 311), and the first holding portion 114 can hold a first end portion 6a side of the adapter 6.

In this preferred embodiment, as illustrated in FIG. 7, the second arm 102 includes the second fixing rotation axis 123 provided on the other end portion of the second swing member 122. The second holding portion 124 is provided on the second fixing rotation axis 123 and is configured to be rotatable around the second fixing rotation axis 123 as an axis. The second holding portion 124 is rotatable around the second fixing rotation axis 123 as an axis between the second fixing rotation position R21 (see FIG. 10) and the second non-fixing rotation position R22 (see FIG. 7). The second holding portion 124 includes the second non-fixing portion 125b and the second fixing portion 125a. The second non-fixing portion 125b is a portion positioned at the first arm 101 side when the second holding portion 124 is in the second non-fixing rotation position R22, as illustrated in FIG. 7. The second fixing portion 125a is a portion positioned at the first arm 101 side when the second holding portion 124 is in the second fixing rotation position R21, as illustrated in FIG. 10, and protrudes more toward the first arm 101 than the second non-fixing portion 125b when the second holding portion 124 is in the second non-fixing rotation position R22. Thus, as illustrated in FIG. 14, when the workpiece 5 is positioned in the holding position P11, the second holding portion 124 is rotated from the second non-fixing rotation position R22 to the second fixing rotation position R21 as indicated by the arrow A24. Accordingly, as illustrated in FIG. 10, the second fixing portion 125a of the second holding portion 124 can be caused to contact the second end portion 6b (specifically, the second fixing recessed portion 312), and the second holding portion 124 can hold a second end portion 6b side of the adapter 6.

In this preferred embodiment, as illustrated in FIG. 7, the first arm 101 includes the first lever 116 that extends from the first holding portion 114 to outside the first holding portion 114. The second arm 102 includes the second lever 126 that extends from the second holding portion 124 to outside of the second holding portion 124. Thus, the user can easily rotate the first holding portion 114 around the first fixing rotation axis 113 as an axis by operating the first lever 116. The user can also easily rotate the second holding portion 124 around the second fixing rotation axis 123 as an axis by rotating the second lever 126.

In this preferred embodiment, as illustrated in FIG. 10, the adapter 6 includes the first stopper 281 provided on the first end portion 6a. When the workpiece 5 is positioned in the holding position P11 and the rotation position of the first holding portion 114 is the first fixing rotation position R11, the first lever 116 contacts the first stopper 281. Thus, when the rotation position of the first holding portion 114 is in the first fixing rotation position R11, movement of the first lever 116 toward the adapter 6 can be regulated. Accordingly, rotation of the first holding portion 114 around the first fixing rotation axis 113 can be regulated.

In this preferred embodiment, the adapter 6 includes the second stopper 282 provided on the second end portion 6b. When the workpiece 5 is positioned in the holding position P11 and the rotation position of the second holding portion 124 is the second fixing rotation position R21, the second lever 126 contacts the second stopper 282. Thus, when the rotation position of the second holding portion 124 is the second fixing rotation position R21, movement of the second lever 126 toward the adapter 6 can be regulated. Accordingly, rotation of the second holding portion 124 around the second fixing rotation axis 123 can be regulated.

Note that, in this preferred embodiment, the first holding portion 114 is configured to be movable in the holding direction D2 by rotating the first holding portion 114 around the first rotation axis 111 as an axis. However, the first rotation axis 111 may be omitted and, in this case, the first holding portion 114 may be configured not to rotate and to be movable in the holding direction D2. Similarly, the second holding portion 124 is configured to be movable in the holding direction D2 by rotating the second holding portion 124 around the second rotation axis 121 as an axis. However, the second rotation axis 121 may be omitted and the second holding portion 124 may be configured not to rotate and to be movable in the holding direction D2. At least one of the first holding portion 114 and the second holding portion 124 may be configured to be movable in the holding direction D2, and the other one of the first holding portion 114 and the second holding portion 124 may be configured to be immovable in the holding direction D2.

## Claims

1. A cutting machine (100) comprising:
a holding device (30) that is configured to hold, in cutting a workpiece (5) that is to be cut, an adapter (6) holding the workpiece (5),
wherein
the holding device (30) is configured to hold the workpiece (5) when the workpiece (5) is moved with respect to the holding device (30) from one side to the other side in an attaching and detaching direction (D1) and is arranged in a holding position (P11),
the holding device (30) includes
a first arm (101) that extends in the attaching and detaching direction (D1), and
a second arm (102) that is arranged so as to be aligned with the first arm (101) in a holding direction (D2) that intersects the attaching and detaching direction (D1), extends in the attaching and detaching direction (D1), and is configured to hold the workpiece (5) with the first arm (101) such that the workpiece (5) is sandwiched between the first arm (101) and the second arm (102),
the adapter (6) includes a first projecting portion (301) that is provided on a first end portion (6a) in one side in the holding direction (D2) and protrudes toward the one side in the holding direction (D2),
the first arm (101) includes
a first holding portion (114) that is movable in the holding direction (D2), and
a first elastic member (118) that applies a pressing force to the first holding portion (114) toward the second arm (102), and
the first holding portion (114)
is configured to be arranged, in a state where the adapter (6) is not held by the holding device (30), in a position that the first projecting portion (301) of the adapter (6) passes when the workpiece (5) moves with respect to the holding device (30) in the attaching and detaching direction (D1) toward the holding position (P11), and
is configured such that, when the workpiece (5) is in middle of moving with respect to the holding device (30) in the attaching and detaching direction (D1) toward the holding position (P11) and the workpiece (5) passes a middle position (P13) that is a position that proceeds from the holding position (P11) in one side in the attaching and detaching direction (D1), the first projecting portion (301) of the adapter (6) contacts the first holding portion (114).

2. The cutting machine (100) according to claim 1, wherein
the adapter (6) includes a second projecting portion (302) that is provided on a second end portion (6b) in the other side in the holding direction (D2) and protrudes toward the other side in the holding direction (D2),
the second arm (102) includes
a second holding portion (124) that is movable in the holding direction (D2), and
a second elastic member (128) that applies a pressing force to the second holding portion (124) toward the first arm (101), and
the second holding portion (124)
is configured to be arranged, in a state where the adapter (6) is not held by the holding device (30), in a position that the second projecting portion (302) of the adapter (6) passes when the workpiece (5) moves with respect to the holding device (30) in the attaching and detaching direction (D1) toward the holding position (P11), and
is configured such that, when the workpiece (5) passes the middle position (P13), the second projecting portion (302) of the adapter (6) contacts the second holding portion (124).

3. The cutting machine (100) according to claim 2, wherein
the first arm (101) includes a first rotation axis (111),
the second arm (102) includes a second rotation axis (121),
the first holding portion (114) is rotatable around the first rotation axis (111) as an axis, and
the second holding portion (124) is rotatable around the second rotation axis (121) as an axis.

4. The cutting machine (100) according to claim 2 or 3, wherein
in the state where the adapter (6) is not held by the holding device (30), a first distance (D11) between the first holding portion (114) and the second holding portion (124) in the holding direction (D2) is shorter than a second distance (D12) between the first projecting portion (301) and the second projecting portion (302) of the adapter (6) in the holding direction (D2).

5. The cutting machine (100) according to any one of claims 2 to 4, wherein
the adapter (6) includes
a first fixing recessed portion (311) that is provided on a portion of the first end portion (6a) in a position that proceeds from the first projecting portion (301) in one side in the attaching and detaching direction (D1) and is recessed toward the second end portion (6b), and
a second fixing recessed portion (312) that is provided on a portion of the second end portion (6b) in a position that proceeds from the second projecting portion (302) in the one side in the attaching and detaching direction (D1) and is recessed toward the first end portion (6a), and
when the workpiece (5) is positioned in the holding position (P11), the first holding portion (114) is configured to be fitted to the first fixing recessed portion (311) of the adapter (6) and the second holding portion (124) is configured to be fitted to the second fixing recessed portion (312) of the adapter (6).

6. The cutting machine (100) according to claim 4, wherein
the adapter (6) includes
a first non-fixing recessed portion (321) that is provided on a portion of the first end portion (6a) in a position that proceeds from the first projecting portion (301) in the other side in the attaching and detaching direction (D1) and is recessed toward the second end portion (6b), and
a second non-fixing recessed portion (322) that is provided on a portion of the second end portion (6b) in a position that proceeds from the second projecting portion (302) in the other side in the attaching and detaching direction (D1) and is recessed toward the first end portion (6a), and
a third direction (D13) between the first non-fixing recessed portion (321) and the second non-fixing recessed portion (322) in the holding direction (D2) is shorter than the first direction (D11).

7. The cutting machine (100) according to claim 3, wherein
the first arm (101) includes a first swing member (112) one end portion of which is provided on the first rotation axis (111) and the other end portion of which is provided on the first holding portion (114), and
the second arm (102) includes a second swing member (122) one end portion of which is provided on the second rotation axis (121) and the other end portion of which is provided on the second holding portion (124).

8. The cutting machine (100) according to claim 7, wherein
the first arm (101) includes a first fixing rotation axis (113) provided on the other end potion of the first swing member (112),
the second arm (102) includes a second fixing rotation axis (123) provided on the other end portion of the second swing member (122),
the first holding portion (114) is provided on the first fixing rotation axis (113) and is configured to be rotatable around the first fixing rotation axis (113) as an axis, and
the second holding portion (124) is provided on the second fixing rotation axis (123) and is configured to rotatable around the second fixing rotation axis (123) as an axis.

9. The cutting machine (100) according to claim 8, wherein
the first holding portion (114) is rotatable around the first fixing rotation axis (113) as an axis between a first fixing rotation position (R11) and a first non-fixing rotation position (R12), and
the first holding portion (114) includes
a first non-fixing portion (115b) that is positioned at a second arm (102) side when the first holding portion (114) is in the first non-fixing rotation position (R12), and
a first fixing portion (115a) that is positioned at the second arm (102) side when the first holding portion (114) is in the first fixing rotation position (R11) and protrudes more toward the second arm (102) than the first non-fixing portion (115b) when the first holding portion (114) is in the first non-fixing rotation position (R12).

10. The cutting machine (100) according to claim 9, wherein
the second holding portion (124) is rotatable around the second fixing rotation axis (123) as an axis between a second fixing rotation position (R21) and a second non-fixing rotation position (R22),
the second holding portion (124) includes
a second non-fixing portion (125b) that is positioned at a first arm (101) side when the second holding portion (124) is in the second non-fixing rotation position (R22), and
a second fixing portion (125a) that is positioned at the first arm (101) side when the second holding portion (124) is in the second fixing rotation position (R21) and protrudes more toward the first arm (101) than the second non-fixing portion (125b) when the second holding portion (124) is in the second non-fixing rotation position (R22).

11. The cutting machine (100) according to claim 9, wherein
the first arm (101) includes a first lever (116) that extends from the first holding portion (114) to outside of the first holding portion (114).

12. The cutting machine (100) according to claim 11, wherein
the adapter (6) includes a first stopper (281) provided on the first end portion (6a), and
when the workpiece (5) is positioned in the holding position (P11) and a rotation position of the first holding portion (114) is the first fixing rotation position (R11), the first lever (116) contacts the first stopper (281).

13. The cutting machine (100) according to claim 10, wherein
the second arm (102) includes a second lever (126) that extends from the second holding portion (124) to outside of the second holding portion (124).

14. The cutting machine (100) according to claim 13, wherein
the adapter (6) includes a second stopper (282) provided on the second end portion (6b), and
when the workpiece (5) is positioned in the holding position (P11) and a rotation position of the second holding portion (124) is the second fixing rotation position (R21), the second lever (126) contacts the second stopper (282).
